# EUROPEAN PATENT APPLICATION

(11) **EP 4 517 881 A1**
(43) Date of publication of application: **05.03.2025**
(21) Application number: 22966266.3
(22) Date of filing: 25.11.2022
(51) Int. Cl.: H01M 4/583

(54) **CARBON MATERIAL AND PREPARATION METHOD THEREFOR, SECONDARY BATTERY COMPRISING SAME AND ELECTRIC DEVICE**

(71) Applicant: Contemporary Amperex Technology (Hong Kong) Limited, Central, Central And Western District (HK)
(72) Inventor: LI, Lianchuan, Ningde, Fujian 352100 (CN); LI, Yuanyuan, Ningde, Fujian 352100 (CN); SHEN, Rui, Ningde, Fujian 352100 (CN); HE, Libing, Ningde, Fujian 352100 (CN)
(74) Representative: Kraus & Lederer PartGmbB
(86) International application number: PCT/CN2022/134449
(87) International publication number: WO 2024/108578

(57) **Abstract**

The present application provides a carbon material, a method for preparing the same, and a secondary battery and an electrical device comprising the same. The carbon material includes a pore structure, the carbon material has a total pore volume denoted as V and a powder compaction density under a pressure of 50,000 N denoted as P, and the carbon material satisfies: 4.1 × 10⁻³ ≤ V × P ≤ 12.0 × 10⁻³, in which the total pore volume V of the carbon material has an unit of cm³/g and the powder compaction density P under a pressure of 50,000 N has an unit of g/cm³. The carbon material provided in the present application can make the secondary battery have high initial columbic efficiency, high energy density and also good cycling performance and storage performance.

## Description

### TECHNICAL FIELD

The present application belongs to the field of battery technology, and specifically relates to a carbon material and the method for preparing the same, and a secondary battery and an electrical device comprising the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, people have put forward serious challenges to the performance of secondary batteries, such as the requirement that secondary batteries need to have high energy density and long service life. Negative electrode active materials are an important part of secondary batteries, because they affect the performances of the secondary batteries. At present, the negative electrodes active materials mainly includes graphite. However, the problem in the prior art is that the graphite having high capacity is difficult to have high initial columbic efficiency simultaneously, and thus is difficult to make the secondary batteries have good cycling performance and storage performance.

### SUMMARY

The present application is intended to provide a carbon material, a method for preparing the same, and a secondary battery and an electrical device comprising the same. The carbon material provided in the present application can make the secondary battery have high initial columbic efficiency, high energy density and also have good cycling performance and storage performance.

A first aspect of the present application provides a carbon material comprising a pore structure, wherein the carbon material has a total pore volume denoted as V and a powder compaction density under a pressure of 50,000 N denoted as P, and the carbon material satisfies: 4.1 × 10⁻³ ≤ V × P ≤ 12.0 × 10⁻³, in which the total pore volume V of the carbon material has an unit of cm³/g and the powder compaction density P under a pressure of 50,000 N has an unit of g/cm³.

The inventors of the present application found during the research that when the carbon material satisfies 4.1 × 10⁻³ ≤ V × P ≤ 12.0 × 10⁻³, it makes the secondary battery have high initial columbic efficiency, high energy density and also have good cycling performance and storage performance. The inventors found that at this time, the carbon material can have a suitable structure, where there are fewer pore structures in the carbon material particles, but at the same time, a part of the pore structures with a slightly larger pore area are retained. This part of the pore structures with a slightly larger pore area can reserve the required expansion space for the volume change of the carbon material particles, which can reduce the risk of fragmentation of the carbon material particles to generate new interfaces, thereby reducing the side reactions, reducing the irreversible capacity loss of the secondary battery, and improving the cycling performance and storage performance of the secondary battery; the pore structure in the particles can also be used for the storage performance of the secondary battery. The particles have less pore structures, which can make the carbon material particles have a stable structure and avoid an electrolytic solution to infiltrate into the pore structure inside the carbon material particles as much as possible, thereby reducing the side reactions and reducing the consumption of active ions by SEI film formation inside the carbon material particles, which can improve the initial columbic efficiency of the carbon material, and further improve the cycling performance and storage performance of the secondary battery. Therefore, the carbon material provided in the present application can effectively reduce the irreversible capacity loss of the secondary battery, improve the capacity exertion property of the secondary battery, and make the secondary battery have high initial columbic efficiency, high energy density and also have good cycling performance and storage performance.

In some embodiments of the present application, 4.3×10⁻³ ≤ V×P ≤ 10.0×10⁻³, optionally 4.4×10⁻³ ≤ V×P ≤ 8.0× 10⁻³. When the V×P of the carbon material is within the above ranges, it makes the secondary battery have high initial columbic efficiency, high energy density and also have good cycling performance and storage performance.

In same embodiments of the present application, the carbon material has a total pore volume V of from 2.3×10⁻³ cm³/g to 7.5×10⁻³ cm³/g, optionally from 2.4×10⁻³ cm³/g to 6.0×10⁻³ cm³/g. When the total pore volume V of the carbon material is within the above range, it makes the secondary battery have high initial columbic efficiency, high energy density and also have good cycling performance and storage performance.

In same embodiments of the present application, the carbon material has a powder compaction density P under a pressure of 50,000 N of from 1.80 g/cm³ to 2.10 g/cm³, optionally from 1.82 g/cm³ to 2.06 g/cm³. When the powder compaction density under a pressure of 50,000 N of the carbon material is within the above range, the plate employing it may have a higher compaction density, which is conducive to improving the group margin and energy density of the secondary battery, and at the same time, the plate employing it may have a suitable pore structure, which is favorable to the infiltration of the electrolytic solution, thereby improving the transport performance of active ions, and improving the cycling performance and/or the dynamic performance of the secondary battery.

In some embodiments of the present application, the carbon material comprises more than one pore structure with a pore area greater than or equal to 0.1 µm², optionally comprising more than one pore structure with a pore area of 0.12 µm²-1.5 µm². When the carbon material further comprises a pore structure with a pore area as described above, the pore structure can reserve the required expansion space for the volume change of the carbon material particles, which can reduce the risk of fragmentation of the carbon material particles to generate new interfaces, thereby reducing the side reactions, reducing the irreversible capacity loss of the secondary battery, and improving the cycling performance and storage performance of the secondary battery; the pore structure in the particles can also be used for the storage performance of the secondary battery.

In same embodiments of the present application, the carbon material comprises an external region and an internal region disposed on the inside of the external region, the external region being a region comprising a distance of 0.25 L extending from the surface of the particles of the carbon material towards the interior of the particles, L being a short-axis length of the particles of the carbon material; total pore area of the external region being denoted as S₁ and total pore area of the internal region being denoted as S₂, and S₂ > S₁. When the carbon material satisfies S₂ > S₁, it can effectively reduce the irreversible capacity loss of the secondary battery, improve the capacity exertion property of the secondary battery, and make the secondary battery have high initial columbic efficiency, high energy density and also have good cycling performance and storage performance.

In some embodiments of the present application, 1.5 ≤ S₂/S₁ ≤ 460, optionally 1.7 ≤ S₂/S₁ ≤ 380. When S₂/S₁ of the carbon material further satisfies the above condition, it can make the secondary battery have high initial columbic efficiency, high energy density and also have good cycling performance and storage performance.

In some embodiments of the present application, 0.01 µm² ≤ S₁ ≤ 15.0 µm², optionally 0.02 µm² ≤ S₁ ≤ 12.0 µm². When the total pore area of the external region of the carbon material is within the above range, on the one hand, the carbon material particles can have a more stable structure, avoiding an electrolytic solution to infiltrate into the pore structure inside the carbon material particles as much as possible, thereby reducing the side reactions and reducing the consumption of active ions by SEI film formation inside the carbon material particles. On the other hand, the transport performance of active ions and electrons will not be affected.

In some embodiments of the present application, 2.5 µm² ≤ S₂ ≤ 25.0 µm², optionally 3.0 µm² ≤ S₂ ≤22.5 µm². When the total pore area of the internal region of the carbon material is within the above range, on the one hand, sufficient and stable expansion space can be reserved for the volume change of the carbon material particles, thereby reducing the risk of fragmentation of the carbon material particles to generate new interfaces, reducing the side reactions on the new interface surface, and reducing the consumption of active ions by SEI film formation on the new interface surface. On the other hand, the capacity and initial columbic efficiency of carbon materials can be improved.

In some embodiments of the present application, L ≥ 4 µm, optionally 6 µm ≤ L ≤ 18 µm.

In some embodiments of the present application, the pore structure in the external region of the carbon material has an area of less than 0.13 µm², optionally less than or equal to 0.1 µm². By controlling the area of the pore structure in the external region of the carbon material within the above range, the external region of the carbon material can have a dense structure, which can effectively improve the structural stability of the carbon material, avoid an electrolytic solution to infiltrate into the pore structure inside the carbon material particles as much as possible, and thus further improve the cycling performance and storage performance of the secondary battery.

In some embodiments of the present application, the internal region of the carbon material includes more than one pore structure with an area of greater than or equal to 0.1 µm², optionally more than one pore structure with an area of from 0.12 µm² to 2.0 µm². By including the pore structure with the above mentioned size in the internal region of the carbon material, sufficient and stable expansion space can be reserved for the volume change of the carbon material particles, thereby reducing the risk of the carbon material particle fragmentation. On the other hand, the compaction density of carbon materials can be improved.

In some embodiments of the present application, the interlayer spacing of the external region of the carbon material is denoted as d₁, the interlayer spacing of the internal region of the carbon material is denoted as d₂, and the carbon material satisfies d₁ ≥ d₂, optionally d₁ > d₂. When the interlayer spacing of the external region of the carbon material is larger, it is more conducive to the rapid intercalation and deintercalation of active ions, thereby further improving the dynamic performances of the secondary battery. When the interlayer spacing in the internal region of the carbon material is smaller, it is more conducive to improving the capacity per gram and compaction density of the carbon material, thereby further enhancing the energy density of the secondary battery.

In some embodiments, d₁ is from 0.33565 nm to 0.33600 nm.

In some embodiments, d₂ is from 0.33553 nm to 0.33575 nm.

In some embodiments of the present application, the carbon material has a specific surface area of from 0.6 m²/g to 2.0 m²/g, optionally from 0.8 m²/g to 1.6 m²/g. The carbon material of the present application has a relatively low specific surface area and relatively low surface activity, which can reduce the consumption of active ions by SEI film formation, and improve the initial columbic efficiency of the carbon material.

In some embodiments of the present application, the carbon material has a volume distribution particle size Dv50 of from 8.0 µm to 20.0 µm, optionally from 8.5 µm to 19.0 µm.

In some embodiments of the present application, the carbon material has a volume distribution particle size Dv10 of from 5.0 µm to15.0 µm, optionally from 6.0 µm to 14.0 µm.

In some embodiments of the present application, the carbon material has a volume distribution particle size Dv90 of from 16.0 µm to 35.0 µm, optionally from 17.0 µm to 34.0 µm.

When the volume distribution particle sizes Dv10, Dv50 and/or Dv90 of carbon materials are within the above range, it is beneficial to improve the transport performance of active ions and electrons, and also beneficial to form a reasonable pore structure between the particles of the negative electrode film layer, thereby further improving the cycling and/or rate performances of the secondary battery.

In some embodiments of the present application, the carbon material has (Dv90-Dv10)/Dv50 of from 0.5 to 1.5, optionally from 0.7 to 1.45. When the (Dv90-Dv10)/Dv50 of the carbon material is within the above range, the particle has a better stacking performance, which is conducive to improving the compaction density of the negative electrode film layer, thereby further improving the energy density of the secondary battery; in addition, it is conducive to forming a reasonable pore structure between the particles of the negative electrode film layer.

In some embodiments of the present application, the morphology of the carbon material includes one or more of blocky, spherical, and quasi-spherical shapes. This is thereby conducive to improving the compaction density of the negative electrode plate, and thereby enhancing the energy density of the secondary battery.

In some embodiments of the present application, the carbon material has a graphitization degree of from 94.0% to 98.5%, optionally from 94.5% to 98.0%. When the graphitization degree of the carbon material is within the above range, it is conducive to improving the transport performance of active ions and electrons of the negative electrode film layer, and is also conducive to have a high capacity per gram of the carbon material, thereby improving the cycling performance, storage performance and/or rate performance of the secondary battery.

In some embodiments of the present application, the carbon material has a tap density of from 0.80 g/cm³ to 1.30 g/cm³, optionally from 0.85 g/cm³ to 1.28 g/cm³. When the tap density of the carbon material is within the above range, the compaction density of the negative electrode plate can be increased, thereby increasing the energy density of the secondary battery. Moreover, it is conductive to forming a reasonable pore structure between the particles of the negative electrode film layer, improving the transport performance of the active ions and electrons, and the cycling and storage performances of the secondary battery can be improved.

In some embodiments of the present application, the carbon material has a capacity per gram of from 350 mAh/g to 371 mAh/g, optionally from 353 mAh/g to 370mAh/g. When the capacity per gram of the carbon material is within the above range, the energy density of the secondary battery can be improved.

A second aspect of the present application provides a method for preparing a carbon material, comprising the following steps: Step 1, providing a raw material with multiple pore structures; Step 2, mixing the raw material with a filling material in a predetermined ratio homogeneously, and then holding at a first temperature T₁ for a first time t₁ to obtain an intermediate; Step 3, holding the obtained intermediate at a second temperature T₂ for a second time t₂ to obtain a carbon material, wherein the carbon material comprises a pore structure, the carbon material has a total pore volume denoted as V and a powder compaction density under a pressure of 50,000 N denoted as P, and the carbon material satisfies: 4.1 × 10⁻³ ≤ V × P ≤ 12.0 × 10⁻³, in which the total pore volume V of the carbon material has an unit of cm³/g and the powder compaction density P under a pressure of 50,000 N has an unit of g/cm³.

In some embodiments of the present application, the raw material includes natural graphite, optionally the natural graphite includes one or more of flake graphite, natural spherical graphite, and microcrystalline graphite.

In some embodiments of the present application, the raw material has a volume distribution particle size Dv50 of from 9.0 µm to 20.0 µm, optionally from 10.0 µm to19.0 µm.

In some embodiments of the present application, the raw material has a total pore volume of ≥10× 10⁻³ mm³/g, optionally from 20×10⁻³ cm³/g to 60×10⁻³ cm³/g. When the pore volume of the raw material is within the above range, it is favorable to carry out the subsequent filling treatment, and is also favorable for the carbon material to have a high capacity per gram.

In some embodiments of the present application, the raw material has a graphitization degree of ≥ 94.0%. When the graphitization degree of the raw material is within the above range, it is favorable for the prepared carbon material to have a high capacity and/or a high compaction density, thereby improving the energy density of the secondary battery.

In some embodiments of the present application, the filling material has a softening point of from 95°C to 158°C, optionally from 100°C to 145°C. When the softening point of the filling material is within the above range, it is favorable for the carbon material to have a suitable total pore volume, and is favorable to regulate the size of the pores and/or the number of pores in the external region and the internal region of the carbon material within a suitable range.

In some embodiments of the present application, the filling material has a coking value of from 15% to 42%, optionally from 20% to 34%. When the coking value of the filling material is within the above range, it is favorable for the carbon material to have a suitable total pore volume, and is favorable to regulate the size of the pores and/or the number of pores in the external region and the internal region of the carbon material within a suitable range.

In some embodiments of the present application, the filling material has a volume distribution particle size Dv50 of less than or equal to 6 µm, optionally from 1 µm to 5 µm, thereby facilitating the filling of the filling material into the pore structure of the raw material after being heated and melted, and also facilitating the improvement of the dispersion uniformity of the filling material and the raw material.

In some embodiments of the present application, the filling material comprises one or more of coal asphalt and petroleum asphalt.

In some embodiments of the present application, a mass ratio of the filling material to the raw material is (10-30):100, optionally (11-20):100. It is favorable for the carbon material to have a suitable total pore volume, and is favorable to regulate the size of the pores and/or the number of pores in the external region and the internal region of the carbon material within a suitable range.

In some embodiments of the present application, after mixing the raw material and filling material in a predetermined proportion homogeneously, they are heated to the first temperature T₁ by a staged heating process, optionally including a first heating process and a second heating process.

In some embodiments of the present application, the first heating process is heating to a temperature of from 200°C to 250°C and holding at this temperature for 1 to 3 hours.

In some embodiments of the present application, the second heating process is heating to the first temperature T₁ and holding at the first temperature T₁ for a first time t₁.

In some embodiments of the present application, it is heated to the first temperature T₁ at a rate of 1° C/min-10 °C/min, optionally 2 °C/min-8 °C/min.

In some embodiments of the present application, the first temperature T₁ is from 700°C to 1200°C, optionally from 800 to 1100°C.

In some embodiments of the present application, the first time t₁ is from 1 hour to 5 hours, optionally from 2 hours to 4 hours.

By adjusting one or more of the factors such as the heating rate, the first temperature, the first time, and the heating process to be within the above ranges, it is beneficial to prepare the carbon material with the desired pore structure, e.g., it is beneficial for the carbon material to have a suitable total pore volume, and is also beneficial to regulate the size of the pores and/or the number of pores in the external region and the internal region of the carbon material within a suitable range.

In some embodiments of the present application, the second temperature T₂ is from 1950°C to 2550°C, optionally from 2050°C to 2500°C.

In some embodiments of the present application, the second time t₂ is from 1.5h to 6h, optionally from 2h to 5h.

A third aspect of the present application provides a secondary battery, comprising a negative electrode plate comprising the carbon material according to the first aspect of the present application or the carbon material prepared by the method according to the second aspect of the present application.

By adjusting the second temperature and/or the second time to be within the above range, it is favorable for the carbon material to have a high capacity per gram and/or a high compaction density, is also favorable to have a suitable total pore volume for the carbon material.

A fourth aspect of the present application provides an electrical device, comprising the secondary battery according to the third aspect of the present application.

The electrical device of the present application includes the secondary battery provided in the present application and thus has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a cross-sectional image of a particle of a carbon material of the present application.
FIG. 2 is a schematic diagram of a secondary battery according to an embodiment of the present application.
FIG. 3 is an exploded view of a secondary battery according to the embodiment of the present application.
FIG. 4 is a schematic diagram of a battery module according to an embodiment of the present application.
FIG. 5 is a schematic diagram of a battery pack according to an embodiment of the present application.
FIG. 6 is an exploded view of the battery pack according to the embodiment of the present application as shown in FIG. 5.
FIG. 7 is a schematic diagram of an electrical device according to an embodiment of the present application using the secondary battery of the present application as power.

The drawings are not drawn to actual scale. Reference numerals are as follows: 1. Battery pack; 2. Upper case body; 3. Lower case body; 4. Battery module; 5. Secondary battery; 51. Casing; 52. Electrode assembly; 53. Cover plate; 100. Carbon material; 101. External region; 102. Internal region.

### DETAILED DESCRIPTION

Hereinafter, embodiments of the carbon material and the method for preparing the same, and the secondary battery and the electrical device comprising the same according to the present application will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise/comprising", "include/including", and "contain/containing" mentioned in the present application mean that it is drafted in an open mode, or it may also mean a close mode. For example, the transition phases "comprise/comprising", "include/including", and "contain/containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

Unless stated otherwise, the terms used in the present application have the well-known meanings commonly understood by those skilled in the art.

Unless stated otherwise, the values of the parameters mentioned in the present application may be determined by various test methods commonly used in the art, for example, according to the test methods given in the present application.

Unless stated otherwise, in the present application, the term "active ions" refers to ions, including but not limited to lithium ions, that can be intercalated and deintercalated back and forth between the positive electrode and the negative electrode of the secondary battery.

In the present application herein, the terms "multiple" and "more than one" mean two or more, unless otherwise stated and specifically limited.

According to different preparation processes or sources, graphite can be divided into artificial graphite and natural graphite. The artificial graphite generally is prepared by a high temperature graphitization process, resulting in high energy consumption and high cost. Thus, the artificial graphite has a higher cost. Natural graphite originates from nature and thus has the advantage of relatively low cost. In addition, natural graphite has the advantages of high capacity.

Natural graphite mainly includes flake graphite, natural spherical graphite, and microcrystalline graphite. Unlike artificial graphite, natural graphite particles have a lot of pores and defects in the inside and on the outside of the particles. During the first charging process of the secondary battery, there are many side reactions between the electrolytic solution and the pores on the surface and inside the particles, resulting in high irreversible capacity loss, low initial columbic efficiency, poor cycling performance and storage performance of the secondary battery. Specifically, flake graphite and natural spherical graphite have high crystallinity and graphitization degree, and have mostly layered microstructure. Such structure leads to significant volume changes in natural graphite during the intercalation and deintercalation of active ions, which is likely to cause the fragmentation of graphite layered structure and particle. After the particles' fragmentation, the exposed fresh surface will continue to react with the electrolytic solution, which will further increase the irreversible capacity loss of the secondary battery.

At present, the performance of natural graphite is mainly improved through particle surface cladding treatment and/or particle internal filling treatment.

The particle surface cladding treatment mainly involves mixing natural graphite and a cladding agent (such as asphalt and polymer compounds) homogeneously before heat treating to clad the surface of natural graphite particles with a layer of carbon, which can slightly repair the defects on the particle surface. However, the inventors of the present application found during the research that the amorphous carbon surface cladding layer can lead to a decrease in the capacity per gram and/or compaction density of natural graphite, affecting the energy density of the secondary battery. At the same time, the amorphous carbon surface cladding layer cannot effectively prevent the electrolytic solution from infiltrating into the pore structure inside the particles, resulting in limited improvement in the initial columbic efficiency, cycling performance and/or storage performance of the secondary battery.

The particle internal filling treatment mainly involves mixing natural graphite with filling agents (such as asphalt, polymer compounds, etc.), and filling the filling agent into the internal pores of particles through preset pressure, and heating, so as to obtain natural graphite without pores inside the particles. However, the inventors of the present application have found during the research that the large amount of carbon, especially soft carbon in the interior of the particles leads to a decrease in the capacity per gram of natural graphite, which affects the energy density of the secondary battery. At the same time, because all the pores inside the natural graphite particles are filled with carbon, the volume of natural graphite changes greatly during the intercalation and deintercalation of active ions, which will render the particles more prone to fragmentation and further lead to repeated destruction and reconstruction of the SEI film on the surface of the particles; as a result, the consumption of active ions increases, the irreversible capacity loss of the secondary battery increases, and the service life of the secondary battery becomes short.

Therefore, the irreversible capacity loss of secondary batteries are reduced and the initial columbic efficiency of secondary batteries is increased to some extent by means of the particle surface cladding treatment and/or particle internal filling treatment of modified natural graphite particles. Nevertheless, the improvement on the initial columbic efficiency of secondary batteries is limited and the energy density of secondary batteries will lose. In addition, the capacity exertion characteristics of the secondary battery during long-term circulation and storage process remains poor.

In view of this, the inventors of the present application have proposed, after extensive research, a new type of carbon material, which combines high capacity per gram, high initial coulombic efficiency, and small volume change, and also enables the secondary battery to have high initial coulombic efficiency, high energy density, and also have good cycling performance and storage performance.

### Carbon Material

In the first aspect, the present application provides a carbon material.

The carbon material comprises a pore structure, wherein the carbon material has a total pore volume denoted as V and a powder compaction density under a pressure of 50,000 N denoted as P, and the carbon material satisfies: 4.1 × 10⁻³ ≤ V × P ≤ 12.0 × 10⁻³, in which the total pore volume V of the carbon material has an unit of cm³/g and the powder compaction density P under a pressure of 50,000 N has an unit of g/cm³.

The inventors of the present application found during the research that when the carbon material satisfies 4.1 × 10⁻³ ≤ V × P ≤ 12.0 × 10⁻³, it makes the secondary battery have high initial columbic efficiency, high energy density and also have good cycling performance and storage performance. The inventors found that at this time, the carbon material can have a suitable structure, where there are fewer pore structures in the carbon material particles, but at the same time, a part of the pore structures with a slightly larger pore area are retained. This part of the pore structures with a slightly larger pore area can reserve the required expansion space for the volume change of the carbon material particles, which can reduce the risk of fragmentation of the carbon material particles to generate new interfaces, thereby reducing the side reactions, reducing the irreversible capacity loss of the secondary battery, and improving the cycling performance and storage performance of the secondary battery; the pore structure in the particles can also be used for the storage performance of the secondary battery. The particles have less pore structures, which can make the carbon material particles have a stable structure and avoid the electrolytic solution to infiltrate into the pore structure inside the carbon material particles as much as possible, thereby reducing the side reactions and reducing the consumption of active ions by SEI film formation inside the carbon material particles, which can improve the initial columbic efficiency of the carbon material, and further improve the cycling performance and storage performance of the secondary battery. Therefore, the carbon material provided in the present application can effectively reduce the irreversible capacity loss of the secondary battery, improve the capacity exertion property of the secondary battery, and make the secondary battery have high initial columbic efficiency, high energy density and also have good cycling performance and storage performance.

When V × P is less than 4.1 × 10⁻³, the total pore volume of the carbon material may be smaller and/or the powder compaction density under a pressure of 50,000 N may be smaller. When the total pore volume of the carbon material is smaller, the volume of carbon material particles changes greatly during the intercalation and deintercalation of active ions, which will render the particles more prone to fragmentation and further lead to repeated destruction and reconstruction of the SEI film on the surface of the particles; as a result, the consumption of active ions increases, the irreversible capacity loss of the secondary battery increases, and the service life of the secondary battery becomes short. When the powder compaction density under a pressure of 50,000 N is smaller, the carbon material may contain a higher content of soft carbon, thereby leading to a lower capacity per gram of the carbon material, and at the same time affecting the energy density of the secondary battery.

When V × P is greater than 12.0 × 10⁻³, the total pore volume of the carbon material may be larger and/or the powder compaction density under a pressure of 50,000 N may be larger. When the total pore volume of the carbon material is larger, there are more defects on the surface and inside of the carbon material particles, and more side reactions between the electrolytic solution and the pores on the surface and inside of the particles, resulting in high initial irreversible capacity loss, low initial columbic efficiency, poor cycling performance and storage performance of the secondary battery. The powder compaction density under a pressure of 50,000 N of the carbon material can reflect the actual compaction of the prepared plate, therefore, when the powder compaction density under a pressure of 50,000 N is larger, there are fewer gaps between the carbon material particles in the plate, the electrolytic solution wettability of the plate is poor and it is not favorable to the intercalation and deintercalation of active ions, thereby resulting in poor cycling performance and/or dynamic performance of the secondary battery.

In some embodiments, the carbon material further satisfies: 4.2×10⁻³ ≤ V×P ≤ 11.0×10⁻³, 4.3×10⁻³ ≤ V×P ≤ 10.0×10⁻³, 4.4×10⁻³ ≤ V×P ≤ 8.0× 10⁻³, 4.4×10⁻³ ≤ V×P ≤ 7.0×10⁻³, 4.4×10⁻³ ≤ V×P ≤ 6.5×10⁻³. The inventors found in further research that when the V×P of the carbon material is within the above ranges, it enables the secondary battery to have high initial columbic efficiency, high energy density, and also have good cycling performance and storage performance.

In some embodiments, the total pore volume V of the carbon material is 2.3×10⁻³ cm³/g-7.5×10⁻³ cm³/g, optionally 2.35×10⁻³ cm³/g-6.0×10⁻³ cm³/g, 2.37×10⁻³ cm³/g-6.0×10⁻³ cm³/g, 2.4×10⁻³ cm³/g-6.0×10⁻³ cm³/g, 2.4×10⁻³ cm³/g-5.5×10⁻³ cm³/g, 2.4×10⁻³ cm³/g-5.0×10⁻³ cm³/g, 2.4×10⁻³ cm³/g-4.5×10⁻³ cm³/g, 2.4×10⁻³ cm³/g-4.0×10⁻³ cm³/g. When the total pore volume of the carbon material is within the above range, on the one hand, it can reduce the risk of fragmentation of the carbon material particles to generate new interfaces, thereby reducing the side reactions, and reducing the irreversible capacity loss of the secondary battery, on the other hand, the carbon material particles can have a more stable structure, avoiding the electrolytic solution to infiltrate into the pore structure inside the carbon material particles as much as possible, thereby reducing the side reactions and reducing the consumption of active ions by SEI film formation inside the carbon material particles. When the total pore volume of the carbon material is within the above ranges, it enables the secondary battery to have high initial columbic efficiency, high energy density, and also have good cycling performance and storage performance.

In some embodiments, the powder compaction density P under a pressure of 50,000 N of the carbon material is 1.80 g/cm³-2.10 g/cm³, optionally 1.82 g/cm³-2.06 g/cm³, 1.82 g/cm³-2.00 g/cm³, 1.85 g/cm³-1.96 g/cm³, 1.85 g/cm³-1.94 g/cm³, 1.85 g/cm³-1.92 g/cm³. When the powder compaction density under a pressure of 50,000 N of the carbon material is within the above range, the plate employing it may have a higher compaction density, which is conducive to improving the group margin and energy density of the secondary battery, and at the same time, the plate employing it may have a suitable pore structure, which is favorable to the infiltration of the electrolytic solution, thereby improving the transport performance of active ions, and improving the cycling performance and/or the dynamic performance of the secondary battery.

The total pore volume of the carbon material has meanings well known in the art, and can be determined using instruments and methods known in the art. An exemplary test method is as follows: a sample of a certain mass of carbon material (e.g., 1.5 g to 3.5 g) is loaded into a sample tube, dried and processed, degassed at 200°a for 2 h, and then placed into a Tristar II 3020 instrumental analytical station for testing to obtain the total pore volume of the carbon material. The adsorption gas for the test can be nitrogen and the adsorption temperature can be 77 K (K denotes Kelvin temperature).

The powder compaction density of the carbon material has meaning well known in the art, and can be determined by instruments and methods known in the art. For example, it can be determined by an electronic pressure tester (e.g., it can be a UTM7305 type electronic pressure tester) with reference to GB/T 24533-2009. An exemplary test method is as follows: 1 g of carbon material powder is weighted and added into a mold with a bottom area of 1.327 cm², pressurized to 5000 kg (equivalent to 50000 N), held the pressure for 30 s, and then unpressurized and held for 10 s, and then recorded and calculated to obtain the powder compaction density P under a pressure of 50,000 N of the carbon material.

In some embodiments, the carbon material comprises more than one pore structure with a pore area greater than or equal to 0.1 µm², optionally comprising more than one pore structure with a pore area of 0.12 µm²-1.5 µm². When the carbon material further comprises a pore structure with a pore area as described above, the pore structure can reserve the required expansion space for the volume change of the carbon material particles, which can reduce the risk of fragmentation of the carbon material particles to generate new interfaces, thereby reducing the side reactions, reducing the irreversible capacity loss of the secondary battery, and improving the cycling performance and storage performance of the secondary battery; the pore structure in the particles can also be used for the storage performance of the secondary battery.

In same embodiments, the carbon material comprises an external region and an internal region disposed on the inside of the external region, the external region being a region comprising a distance of 0.25 L extending from the surface of the particles of the carbon material towards the interior of the particles, L being a short-axis length of the particles of the carbon material; total pore area of the external region being denoted as S₁ and total pore area of the internal region being denoted as S₂, and S₂ > S₁.

In the present application, the total pore area S₁ of the external region and the total pore area S₂ of the internal region of the first carbon-based material can be obtained by testing a cross-sectional image of the first carbon-based material.

In the present application, the cross-sectional image of the first carbon-based material includes a cross-sectional image passing through a particle center of the first carbon-based material. "Particle center" means an area within a radius extending 0.1 µm from a geometric center of the particle toward the surface of the particle.

In the present application, the short axis length of the particle is the minimum value when a line connecting two points on the surface of the particle passes through the geometric center of the particle.

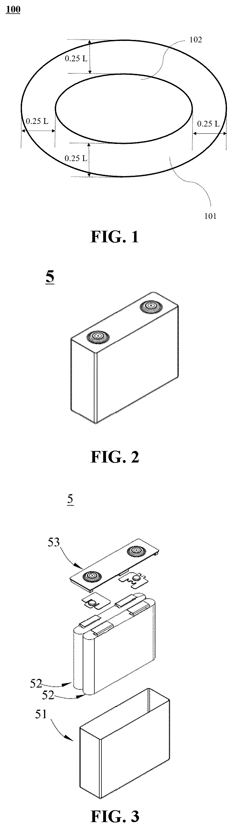

FIG. 1 is a schematic diagram of a cross-sectional image of a particle of the carbon material 100 of the present application, and the cross-sectional image passes through the particle center of the carbon material 100. As shown in FIG. 1, L denotes a short-axis length of a particle of the carbon material 100, and a region comprising a distance of 0.25 L extending from the surface of the particle of the carbon material 100 toward the interior of the particle is the external region 101, and the region inside the external region 101 is the internal region 102.

A cross-section of the first carbon-based material can be prepared using a cross section polisher (e.g., an argon ion Cross Section Polisher IB-09010 CP from JEOL Company of Japan); the cross-section of the first carbon-based material is then scanned using a scanning electron microscope (e.g., a Sigma 300 scanning electron microscope from e ZEISS Company of Germany) with reference to JY/T010-1996; and the cross-section of the first carbon-based material is finally scanned by an image processing software (e.g., AVIZO) to calculate the total pore area S₁ of the external region and the total pore area S₂ of the internal region of the carbon material.

When the carbon material satisfies S₂ > S₁, the carbon material particles may have the following features: a high number of pores and/or a large pore size in the internal region and a low number of pores and/or a small pore size in the external region. The number of pores in the internal region of the carbon material particles is higher and/or the size of the pores is larger, whereby the pore structure can reserve the required expansion space for the volume change of the carbon material particles, thereby reducing the risk of fragmentation of the carbon material particles to generate new interfaces, thereby reducing the side reactions, reducing the irreversible capacity loss of the secondary battery, and improving the cycling performance and storage performance of the secondary battery; the number of pores in the external region of the carbon material particles is lower and/or the size of the pores is smaller, whereby the carbon material particles can be made to have a more stable structure, avoiding the electrolytic solution to penetrate into the internal pore structure of the carbon material particles as much as possible, thereby being able to reduce the side reactions, reduce the consumption of active ions for the formation of the SEI film inside the particles, and thus be able to enhance the initial coulombic efficiency of the carbon material and further improve the cycling performance and storage performance of the secondary battery. Therefore, when the carbon material satisfies S₂ > S₁, it can effectively reduce the irreversible capacity loss of the secondary battery, improve the capacity exertion property of the secondary battery, and enable the secondary battery to have high initial coulombic efficiency, high energy density, and also have good cycling performance and storage performance.

In some embodiments, 1.5 ≤ S₂/S₁ ≤ 460, 1.7 ≤ S₂/S₁ ≤ 380, 2 ≤ S₂/S₁ ≤ 350, 2.1 ≤ S₂/S₁ ≤ 300, 2.2 ≤ S₂/S₁ ≤ 200, 2.2 ≤ S₂/S₁ ≤ 150. The inventors found in further research that when S₂/S₁ of the carbon material further satisfies the above condition, it can make the secondary battery have high initial columbic efficiency, high energy density and also have good cycling performance and storage performance.

In some embodiments, 0.01 µm² ≤ S₁ ≤ 15.0 µm², optionally 0.02 µm² ≤ S₁ ≤ 12.0 µm², 0.1 µm² ≤ S₁ ≤ 12.0 µm², 0.2 µm² ≤ S₁ ≤ 12.0 µm², 0.2 µm² ≤ S₁ ≤ 10.0 µm². When the total pore area of the external region of the carbon material is within the above range, on the one hand, the carbon material particles can have a more stable structure, avoiding the electrolytic solution infiltrate into the pore structure inside the carbon material particles as much as possible, thereby reducing the side reactions and reducing the consumption of active ions by SEI film formation inside the carbon material particles. On the other hand, the transport performance of active ions and electrons will not be affected.

In some embodiments, 2.5 µm² ≤ S₂ ≤ 25.0 µm², optionally 3.0 µm² ≤ S₂ ≤ 22.5µm², 3.5 µm² ≤ S₂ ≤ 20.0 µm², 4.0 µm² ≤ S₂ ≤ 17.5 µm². When the total pore area of the internal region of the carbon material is within the above range, on the one hand, sufficient and stable expansion space can be reserved for the volume change of the carbon material particles, thereby reducing the risk of fragmentation of the carbon material particles to generate new interfaces, reducing the side reactions on the new interface surface, and reducing the consumption of active ions by SEI film formation on the new interface surface. On the other hand, the capacity and initial columbic efficiency of carbon materials can be improved.

In some embodiments, L ≥ 4 µm, optionally, 4 µm ≤ L ≤ 20 µm, 6 µm ≤ L ≤ 19 µm, 8 µm ≤ L ≤ 19 µm, 8 µm ≤ L ≤ 18 µm, 8 µm ≤ L ≤ 16 µm.

In some embodiments, the pore structure in the external region of the carbon material has an area of less than or equal to 0.13 µm², optionally less than or equal to 0.1 µm². The inventors found in further research that by controlling the area of the pore structure in the external region of the carbon material within the above range, the external region of the carbon material can be made to have a dense structure, whereby the structural stability of the carbon material can be effectively improved to avoid as much as possible the penetration of the electrolytic solution into the pore structure inside the carbon material particles, which can then further improve the cycling performance and storage performance of the secondary battery. Of course, the present application does not intend to limit that all of the pore structures in the external region of the carbon material have an area of less than or equal to 0.13 µm², for example, it can be controlled that more than 95%, optionally more than 99%, of the pore structures have an area of less than or equal to 0.13 µm², optionally less than or equal to 0.1 µm²..

In some embodiments, the internal region of the carbon material includes more than one pore structure having an area of greater than or equal to 0.1 µm², optionally includes more than one pore structure having an area of from 0.12 µm² to 2.0 µm². By including the pore structure with the above mentioned size in the internal region of the carbon material, sufficient and stable expansion space can be reserved for the volume change of the carbon material particles, thereby reducing the risk of fragmentation of the carbon material particles. On the other hand, the compaction density of carbon materials can be improved.

In some embodiments, the interlayer spacing of the external region of the carbon material is denoted as d₁, the interlayer spacing of the internal region of the carbon material is denoted as d₂, and the carbon material satisfies d₁ ≥ d₂, optionally d₁ > d₂.

When the interlayer spacing of the external region of the carbon material is larger, it is more conducive to the rapid intercalation and deintercalation of active ions, thereby further improving the dynamic performances of the secondary battery. When the interlayer spacing in the internal region of the carbon material is smaller, it is more conducive to improving the capacity per gram and compaction density of the carbon material, thereby further enhancing the energy density of the secondary battery.

In some embodiments, d₁ is from 0.33565 nm to 0.33600 nm.

In some embodiments, d₂ is from 0.33553 nm to 0.33575 nm.

The interlayer spacing of different regions of carbon materials can be tested using instruments and methods known in the art. For example, High-Resolution Transmission Electron Microscopy (HRTEM) can be used for testing. The test instrument may be Spectra S/TEM Scanning Transmission Electron Microscope from Thermo Fisher Scientific.

In some embodiments, the carbon material comprises primary particles, and the quantity proportion of the primary particles in the carbon material is greater than or equal to 50%, for example, 55%-95%, 60%-100%, 65%-90%, 65%-80%, 70%-100%, 75%-90%, 80%-100%, 90%-100%, or 95%-100%. When the carbon material comprises an appropriate proportion of primary particles, it can be made to have high structural stability and reduce the side reactions, and in addition, the compaction density of the negative electrode film can be enhanced, thereby enhancing the energy density of the secondary battery.

In some embodiments, all the carbon materials may be primary particles, i.e., the quantity proportion of the primary particles in the carbon materials is 100%.

In the present application, both primary particles and secondary particles have meanings well known in the art. Primary particles are particles in a non-agglomerated state. Secondary particles are particles in an agglomerated state formed by the aggregation of two or more primary particles. Primary particles and secondary particles can be distinguished by using scanning electron microscope (SEM) images.

In the present application, the quantity proportion of primary particles in the carbon material refers to the average of statistical results obtained by: taking randomly a test sample from the negative electrode film, taking randomly a plurality of test areas in the test sample, obtaining images of the plurality of test areas using a scanning electron microscope, and counting the proportion of the number of primary particles in the carbon material in each image to the total number of particles in the carbon material to obtain the average of the plurality of statistical results as the quantity proportion of primary particles in the carbon material.

In some embodiments, the morphology of the carbon material includes one or more of blocky, spherical, and quasi-spherical shapes. This is thereby conducive to improving the compaction density of the negative electrode plate, and thereby enhancing the energy density of the secondary battery.

In some embodiments, the carbon material has a graphitization degree of from 94.0% to 98.5%, optionally from 94.5% to 98.0%. When the graphitization degree of carbon materials is within the above range, it is conducive to improving the transport performance of active ions and electrons of the negative electrode film layer, and is also conducive to have a high capacity per gram of the carbon material, thereby improving the cycling performance, storage performance and/or rate performance of the secondary battery.

The graphitization degree of the carbon material has the meaning known in the art, and can be tested by instruments and methods known in the art. For example, the graphitization degree may be tested by an X-ray diffractometer (such as Bruker D8 Discover) with reference to JIS K 0131-1996 and JB/T 4220-2011 to obtain the average interplanar spacing d₀₀₂ of (002) crystal plane in the crystalline structure of the carbon material, and then calculated graphitization degree according to the formula g = (0.344 - d₀₀₂)/(0.344 - 0.3354)×100%. In the above formula, d₀₀₂ is an average interplanar spacing of (002) crystal plane in the crystalline structure of the carbon material, expressed in nanometers (nm).

In some embodiments, the carbon material has a specific surface area of from 0.6 m²/g to 2.0 m²/g, optionally from 0.8 m²/g to 1.6 m²/g. The carbon material of the present application has a relatively low specific surface area and relatively low surface activity, which can reduce the consumption of active ions in SEI film formation, and improve the initial columbic efficiency of the carbon material.

The specific surface area of the carbon material has a meaning known in the art, and can be measured by instruments and methods known in the art. For example, the specific surface area may be tested by a nitrogen adsorption specific surface area analysis test method with reference to GB/T 19587-2017, and calculated by a BET (Brunauer Emmett Teller) method. The nitrogen adsorption specific surface area analysis test may be performed by a Tri-Star 3020 specific surface area pore size analysis tester from Micromeritics, USA.

In some embodiments, the carbon material has a volume distribution particle size Dv50 of from 8.0 µm to 20.0 µm, optionally from 8.5 µm to 19.0 µm.

In some embodiments, the carbon material has a volume distribution particle size Dv10 of from 5.0 µm to 15.0 µm, optionally from 6.0 µm to 14.0 µm.

In some embodiments, the carbon material has a volume distribution particle size Dv90 of from 16.0 µm to 35.0 µm, optionally from 17.0 µm to 34.0 µm.

When the volume distribution particle sizes Dv10, Dv50 and/or Dv90 of carbon materials are within the above range, it is beneficial to improve the transport performance of active ions and electrons, and also beneficial to form a reasonable pore structure between the particles of the negative electrode film layer, thereby further improving the cycling and/or rate performances of the secondary battery.

In some embodiments, the carbon material has (Dv90-Dv10)/Dv50 of from 0.5 to 1.5, optionally from 0.7 to 1.45. When the (Dv90-Dv10)/Dv50 of the carbon material is within the above range, the particle has a better stacking performance, which is conducive to improving the compaction density of the negative electrode film layer, thereby further improving the energy density of the secondary battery; in addition, it is conducive to forming a reasonable pore structure between the particles of the negative electrode film layer.

The volume distribution particle sizes Dv10, Dv50, and Dv90 of the carbon material have the meanings known in the art, which indicate the particle sizes corresponding to when the cumulative volume distribution percentage of the material reaches 10%, 50%, and 90%, respectively, and can be measured by instruments and methods known in the art. For example, it can be determined using a laser particle size analyzer with reference to GB/T 19077-2016. The testing instrument may be a Mastersizer 2000 laser particle size analyzer from Malvern Instruments Ltd. of the United Kingdom.

In some embodiments, the carbon material has a tap density of from 0.8 g/cm³ to 1.30 g/cm³, optionally from 0.85 g/cm³ to 1.28 g/cm³. When the tap density of the carbon material is within the above range, the compaction density of the negative electrode plate can be increased, thereby increasing the energy density of the secondary battery. Moreover, it is conductive to forming a reasonable pore structure between the particles of the negative electrode film layer, improving the transport performance of the active ions and electrons, and the cycling and storage performances of the secondary battery can be improved.

The tap density of the carbon material has a meaning that is well known in the art, and can be determined using instruments and methods known in the art. For example, it can be determined using a powder tap density tester with reference to GB/T 5162-2006. The test instrument may be Dandong Baxter BT-301.

In some embodiments, the carbon material has a capacity per gram of from 350 mAh/g to 371 mAh/g, optionally from 353 mAh/g to 370 mAh/g. When the capacity per gram of the carbon material is within the above range, the energy density of the secondary battery can be improved.

The capacity per gram of the carbon material has a well-known meaning in the art, and can be tested using methods well-known in the art. The exemplary test method is as follows: a carbon material sample is mixed under stirring with styrene butadiene rubber (SBR) as a binder, sodium carboxymethyl cellulose (CMC) as a thickener, and carbon black as a conductive agent in a mass ratio of 96.2:1.8:1.2:0.8 in an appropriate amount of deionized water as a solvent, to form a uniform negative electrode slurry; the negative electrode slurry is applied homogeneously on the surface of copper foil as the negative electrode current collector, and is kept for later use after drying in an oven; ethylene carbonate (EC), methyl ethyl carbonate (EMC), and diethyl carbonate (DEC) are mixed in a volume ratio of 1:1:1 to obtain an organic solvent, and then LiPF₆ is dissolved in the aforementioned organic solvent to prepare an electrolytic solution with a concentration of 1mol/L; afterwards, a metal lithium plate is used as the counter electrode and polyethylene (PE) film is used as the separator, to assemble a CR2430 button battery in an glove box under argon protection; at 25°C, the prepared button battery is first discharged to 0.005 V at a constant current of 0.15 mA, after standing for 5 minutes, it is discharged to 0.005 V at a constant current of 10 µA, then the discharging capacity at the 1^{st} cycle of the button battery is recorded; afterwards, the button battery is charged to 2.0 V at a constant current of 0.3 mA and the charging capacity is recorded. The ratio of the charging capacity of the button battery to the mass of the carbon material sample is the capacity per gram of the carbon material.

### Preparation Method

A second aspect of the present application provides a method for preparing a carbon material, which may be used for preparing the carbon material according to the first aspect of the present application.

The method for preparing a carbon material comprises the following steps: Step 1, providing a raw material having multiple pore structures; Step 2, mixing the raw material with a filling material in a predetermined ratio homogeneously, and then holding at a first temperature T₁ for a first time t₁ to obtain an intermediate; Step 3, holding the obtained intermediate at a second temperature T₂ for a second time t₂ to obtain a carbon material, wherein the carbon material comprises a pore structure, the carbon material has a total pore volume denoted as V and a powder compaction density under a pressure of 50,000 N denoted as P, and the carbon material satisfies: 4.1 × 10⁻³ ≤ V × P ≤ 12.0 × 10⁻³, in which the total pore volume V of the carbon material has an unit of cm³/g and the powder compaction density P under a pressure of 50,000 N has an unit of g/cm³.

In some embodiments, the raw material for preparing the carbon material includes natural graphite. Optionally, the natural graphite includes one or more of flake graphite, natural spherical graphite, and microcrystalline graphite, optionally natural spherical graphite.

"Natural spherical graphite" refers to natural graphite having a spherical or spheroidal-like shape, and not all natural graphite particles are controlled to be ideally spherical. In some embodiments, the natural spherical graphite can be obtained by pre-treating the flake graphite to obtain the desired particle size and morphology, optionally the pre-treatment comprising processes such as crushing, grading, spheronization, purification, etc.

In some embodiments, the morphology of the raw material includes one or more of spherical and quasi-spherical shapes.

In some embodiments, the raw material may have a volume distribution particle size Dv50 of from 9.0 µm to 20.0 µm, optionally from 10.0 µm to 19.0 µm. When the volume distribution particle size of the raw material is within the above ranges, it is beneficial for subsequent filling treatment.

In some embodiments, the raw material has a total pore volume of≥10×10⁻³ cm³/g, optionally from 20×10⁻³ cm³/g to 60×10⁻³ cm³/g. When the pore volume of the raw material is within the above range, it is favorable to carry out the subsequent filling treatment, and is also favorable for the carbon material to have a high capacity per gram.

In some embodiments, the raw material has a graphitization degree of ≥ 94.0%. When the graphitization degree of the raw material is within the above range, it is favorable for the prepared carbon material to have a high capacity and/or a high compaction density, thereby improving the energy density of the secondary battery.

By adjusting the particle size and/or total pore volume of the raw material within the above range, it is possible to minimize the agglomeration of the raw material in the subsequent preparation process, whereby it is possible to reduce the problems of increased surface defects on the surface of the carbon material particles and increased surface side-reaction sites due to the addition of the depolymerization process.

In some embodiments, the filling material has a volume distribution particle size Dv50 of less than or equal to 6 µm, optionally from 1µm to 6µm, from 1µm to 5µm, from 2µm to 5µm, from 3µm to 5µm, thereby facilitating the filling of the filling material into the pore structure of the raw material after being heated and melted, and also facilitating the improvement of the dispersion uniformity of the filling material and the raw material.

In some embodiments, the filling material has a softening point of from 95°C to 158°C. For example, the softening point of the filling material may be 90°C, 95°C, 100°C, 105°C, 110°C, 115°C, 120°C, 125°C, 130°C, 135°C, 140°C, 145°C, 150°C or in a range comprising any of the above values. Optionally, the filling material has a softening point of 100°C-145°C.

The inventor found during the research that when the softening point of the filling material is within the above range, it is favorable to allowing the carbon material to have a suitable total pore volume, and also is favorable to regulating the size of the pores and/or the number of pores in the external region and the internal region of the carbon material in a suitable range. In addition, the following can be effectively avoided: when the softening point of the filling material is excessively high, the filling material is not easy to flow and fill into the pore structure of the raw material, so that it cannot effectively reduce the internal defects of the carbon material particles, nor could effectively prevent the electrolytic solution from infiltrating into the internal pore structure of the obtained carbon material particles, and the obtained carbon material has a larger total pore volume, which then influences the initial coulombic efficiency, cycling performance and storage performance of the secondary battery; when the softening point of the filling material is excessively low, the filling material contains more small molecules, and these small molecules are easy to volatilize when heated, so although the filling material is easy to flow and fill into the pore structure of the raw material, the small molecules in the filling material volatilize when heat treatment is carried out at high temperature, which leads to the fact that the actual residual carbon in the filling region is not able to fill in the pore structure of the raw material efficiently, and the effective filling effect is not achieved or the actual residual carbon in the filling area has more pore structures, which in turn fails to reduce the consumption of active ions by the SEI film formation and reduce the irreversible capacity loss of the secondary battery, and also affects the cycling performance and/or storage performance of the secondary battery.

In some embodiments, the filling material has a coking value of 15%-42%, optionally 18%-38%, 20%-38%, 22%-38%, 24%-38%, 26%-38%. When the coking value of the filling material is within the above range, it is favorable for the carbon material to have a suitable total pore volume, and is favorable to regulate the size of the pores and/or the number of pores in the external region and the internal region of the carbon material within a suitable range.

In some embodiments, the filling material has a softening point of from 100°C to 145°C and a coking value of from 20% to 38%.

The coking value of the filling material has a meaning known in the art and can be determined by instruments and methods known in the art. For example, it can be determined with reference to GB/T 8727-2008.

In some embodiments, the filling material comprises one or more of coal asphalt and petroleum asphalt.

In some embodiments of the present application, a mass ratio of the filling material to the raw material is (10-30):100, optionally (10-25):100, (10-20):100, (11-20):100, it is favorable to allowing the carbon material to have a suitable total pore volume, and is favorable to regulating the size of the pores and/or the number of pores in the external region and the internal region of the carbon material within a suitable range. In addition, the following can be effectively avoided: when the mass ratio of the filling material to the raw material is excessively small, the filling material is not easy to flow and fill into the pore structure of the raw material, thereby not effectively reducing the internal defects of the obtained carbon material particles, and not effectively preventing the electrolytic solution from infiltrating into the internal pore structure of the obtained carbon material particles, at which time the total pore volume of the obtained carbon material is still large, which then influences the initial coulombic efficiency, the cycling performance and storage performance of the secondary battery; when the mass ratio of filling material to raw material is excessively large, it is easy to cause the internal pore structure of raw material to be completely filled, at which time the total pore volume of the obtained carbon material is small, and the volume of carbon material changes greatly during the intercalation and deintercalation of active ions, which results in the facts that the particles are more prone to fragmentation, the consumption of active ions by the SEI film formation increases, and the irreversible capacity loss of the secondary battery increases; in addition, when the mass ratio of filling material to raw material is excessively large, a large amount of filling material is also easy to be left on the surface of the particles, at which time the particles are more likely to agglomerate, which not only requires the addition of the depolymerization process, but also reduces the capacity per gram and/or compaction density of the obtained carbon material.

By adjusting the parameters such as the type, the softening point, the coking value, and the addition amount of the filling material within the above range, the filling material, after being heated and melted, does not have a high viscosity, maintains good fluidity, and at the same time is not easy to bond the raw material particles, which is capable of reducing the agglomeration of the raw material particles in the subsequent preparation process, and thereby also reduces the problems such as an increase in the defects on the surface of the carbon material particles and an increase in the number of surface side reaction sites and the like due to the need for additional depolymerization processes.

In some embodiments, in step 2, after mixing the raw material and filling material in a predetermined ratio homogeneously, they are heated to the first temperature T₁ by a staged heating process, optionally including a first heating process and a second heating process.

In some embodiments, the first heating process is heating to a temperature of from 200°C to 250°C and holding at this temperature for 1 to 3 hours.

he inventors have found during the research that when the holding time of the first heating process is within the above range, it is favorable for the carbon material to have a suitable total pore volume, and is favorable to regulate the size of the pores and/or the number of pores in the external region and the internal region of the carbon material within a suitable range. In addition the following situations can be effectively avoided: when the holding time of the first heating process is excessively short, the filling material is not easy to flow and fill into the pore structure of the raw material after being heated and melted, but may be carbonized on the surface of the particles, so that it cannot effectively reduce the internal defects of the carbon material particles, nor could effectively prevent the electrolytic solution from infiltrating into the internal pore structure of the obtained carbon material particles, and the obtained carbon material has a larger total pore volume, which then influences the initial coulombic efficiency, cycling performance and storage performance of the secondary battery; when the holding time of the first heating process is excessively long, which results in that the volume of carbon material changes greatly during the intercalation and deintercalation of active ions, the particles are more prone to fragmentation, thereby increasing the consumption of active ions by the SEI film formation, and increasing the irreversible capacity loss of the secondary battery, and also affecting the cycling performance, storage performance and rate performance of the secondary battery.

In some embodiments, the second heating process is heating to the first temperature T₁ and holding at the first temperature T₁ for a first time t₁.

In some embodiments, in step 2, the temperature is raised up to the first temperature T₁ at a rate of 1 °C/min-10 °C/min. For example, the heating rate may be 1.5 °C/min, 2 °C/min, 3 °C/min, 4 °C/min, 5 °C/min, 6 °C/min, 7 °C/min, 8 °C/min, 9 °C/min, 10 °C/min, or in a range comprising any value. Optionally, the heating rate is 1.5 °C/min-8 °C/min.

In some embodiments, the heating rate of the first heating process may be 1 °C/min-10 °C/min. For example, the heating rate may be 1.5 °C/min, 2 °C/min, 3 °C/min, 4 C/min, 5 °C/min, 6 °C/min, 7 °C/min, 8 °C/min, 9 °C/min, 10 °C/min, or in a range comprising any value. Optionally, the heating rate is 1.5 °C/min-8 °C/min.

The inventor found during the research that when the heating rate of the first heating process is within the above range, it is favorable to allowing the carbon material to have a suitable total pore volume, and is favorable to regulating the size of the pores and/or the number of pores in the external region and the internal region of the carbon material within a suitable range. In addition, the following situations can be effectively avoided: when the heating rate is excessively large, the filling material may be carbonized on the surface of the raw material particles, so that it cannot effectively reduce the internal defects of the carbon material particles, nor could effectively prevent the electrolytic solution from infiltrating into the internal pore structure of the obtained carbon material particles, and the obtained carbon material has a larger total pore volume, which then influences the initial coulombic efficiency, cycling performance and storage performance of the secondary battery; when the heating rate is excessively small, the filling material is easy to flow and fill into all the pore structure of the raw material, resulting in a larger volume change of the carbon material in the process of active ions' intercalation and deintercalation, and the particles are more prone to fragmentation, which will increase the consumption of active ions by the SEI film formation, increase the irreversible capacity loss of the secondary battery, and also affect the cycling performance, storage performance, and rate performance.

In some embodiments, the heating rate of the second heating process may be 1 °C/min-10 °C/min. For example, the heating rate may be 1.5 °C/min, 2 °C/min, 3 °C/min, 4 °C/min, 5 °C/min, 6 °C/min, 7 °C/min, 8 °C/min, 9 °C/min, 10 °C/min, or in a range comprising any value. Optionally, the heating rate is 2 °C/min-8 °C/min. This facilitates full carbonization of the filling material and reduces the volatile content.

In the staged heating process, the temperature is first raised to 200 °C-250 °C, and since the heating temperature is higher than the softening point of the filling material, the filling material is melted and softened by heating at this time, and holding the temperature for 1h-3h can make it flow and fill the pore structure of the raw material; and after that, the temperature is raised to a first temperature T₁, at which time the melted and softened filling material undergoes a carbonization reaction, thereby enabling the pore structure occupied by the filling material to be effectively filled, and also facilitating the carbon material to have a suitable total pore volume, and facilitating the regulation of the size of the pores and/or the number of pores in the external region and the internal region of the carbon material within a suitable range.

In some embodiments, in step 2, the first temperature T₁ is 700 °C-1200 °C. For example, the first temperature T₁ may be 750 °C, 800 °C, 850 °C, 900 °C, 950 °C, 1000 °C, 1050 °C, 1100 °C or a range consisting of any of the above values. Optionally, the first temperature T₁ is 800 °C-1100°C.

The inventors have found during the research that when the first temperature is within the above range, it is favorable for the carbon material to have a suitable total pore volume, and is favorable to regulate the size of the pores and/or the number of pores in the external region and the internal region of the carbon material within a suitable range. In addition, the following situations can be effectively avoided: if the first temperature is excessively low, the filling material may not be fully converted into carbon material, and during the subsequent heat treating in Step 3, it will continue to decompose into small molecule substances, resulting in the actual residual carbon in the filling area having a large pore structure, so that it cannot effectively reduce the internal defects of the carbon material particles, nor could effectively prevent the electrolytic solution from infiltrating into the internal pore structure of the obtained carbon material particles, and the obtained carbon material has a larger total pore volume, which then influences the initial coulombic efficiency, cycling performance and storage performance of the secondary battery; when the first temperature is excessively high, the energy consumption and cost during the preparation process of carbon materials will increase.

In some embodiments, the first time t₁ is 1h-5h. For example, the first time t₁ may be 1h, 1.5h, 2h, 2.5h, 3h, 3.5h, 4h, 4.5h, 5h, or in a range comprising any of the above values. Optionally, the first time t₁ is 2h-4h.

The inventors have found during the research that when the first time is within the above range, it is favorable for the carbon material to have a suitable total pore volume, and is favorable to regulate the size of the pores and/or the number of pores in the external region and the internal region of the carbon material within a suitable range. In addition, it can effectively avoid the following situation: when the first time is excessively short, the filling material may not be fully converted into carbon material, and during the subsequent heat treating in Step 3, it will continue to decompose into small molecule substances, resulting in the actual residual carbon in the filling area having a large pore structure, so that it cannot effectively reduce the internal defects of the carbon material particles, nor could effectively prevent the electrolytic solution from infiltrating into the internal pore structure of the obtained carbon material particles, and the obtained carbon material has a larger total pore volume, which then influences the initial coulombic efficiency, cycling performance and storage performance of the secondary battery; when the first time is excessively long, the energy consumption and cost during the preparation process of carbon materials will be increased.

In some embodiments, in step 2, the heat treatment may be carried out in a vertical granulating kettle, a horizontal granulating kettle, a vertical reactor, a horizontal reactor, or a drum furnace.

In some embodiments, in step 2, atmosphere for the heating treatment may be a protective gas atmosphere. The protective gas may include one or more of nitrogen, argon and helium.

In step 2, by adjusting one or more of the factors such as the heating rate, the first temperature, the first time, and the heating process to be within the above ranges, it is beneficial to prepare the carbon material with the desired pore structure, e.g., it is beneficial for the carbon material to have a suitable total pore volume, and is also beneficial to regulate the size of the pores and/or the number of pores in the external region and the internal region of the carbon material within a suitable range.

In some embodiments, the second temperature T₂ is 1950°C-2550°C. For example, the second temperature may be 2000°C, 2050°C, 2100°C, 2150°C, 2200°C, 2250°C, 2300°C, 2350°C, 2400°C, 2450°C, 2500°C, 2550°C, or in a range comprising any of the above values. Optionally, the second temperature T₂ is 2050°C-2500°C, or 2100°C-2400°C.

The inventor found during the research that when the second temperature is within the above range, it is favorable for the carbon material to have a suitable total pore volume, and is also favorable for the carbon material to have a high specific volume and/or a high compaction density. In addition the following situations can be effectively avoided: when the second temperature is excessively low, the content of soft carbon in the obtained carbon material is high, affecting the capacity per gram and/or compaction density of the carbon material; when the second temperature is excessively high, the content of disordered carbon in the carbon material obtained is too low, and the crystallinity and graphitization of the carbon material are high, at which time it is not conducive to the active ions' intercalation and deintercalation, while the volume change of the carbon material during the charging and discharging process is also large, thereby also increasing the risk of fragmentation of the carbon material particles, and thus affecting the cycling performance and/or dynamic performance of the secondary battery; furthermore, when the second temperature is excessively high, the energy consumption and cost of the preparation process of the carbon material will be increased.

In some embodiments, the second time t₂ is 1.5h-6h. For example, the second time t₁ may be 2h, 2.5h, 3h, 3.5h, 4h, 4.5h, 5h, 5.5h, 6h, or in a range comprising any of the above values. Optionally, the second time t₂ is 2h-5h.

The inventor found during the research that when the second time is within the above range, it is favorable for the carbon material to have a suitable total pore volume, and is also favorable for the carbon material to have a high specific volume and/or a high compaction density. In addition it can effectively avoid the following situations: when the second time is excessively short, the content of soft carbon in the obtained carbon material is high, affecting the capacity per gram and/or compaction density of the carbon material; when the second time is excessively long, the content of disordered carbon in the carbon material obtained is too low, and the crystallinity and graphitization of the carbon material are high, at which time it is not conducive to the active ions' intercalation and deintercalation, while the volume change of the carbon material during the charging and discharging process is also large, thereby also increasing the risk of fragmentation of the carbon material particles, and thus affecting the cycling performance and/or dynamic performance of the secondary battery; furthermore, when the second time is excessively long, the energy consumption and the cost of the carbon material preparation process will be increased.

In some embodiments, in Step 3, the heat treatment may be carried out in an intermediate frequency furnace, a chamber graphitization furnace, an Acheson graphitization furnace, a continuous graphitization furnace, or an inner string graphitization furnace.

In some embodiments, in Step 3, atmosphere for the heating treatment in the medium frequency furnace, continuous graphitization furnace may be a protective gas atmosphere. The protective gas may include one or more of nitrogen, argon, and helium.

By adjusting the second temperature and/or the second time to be within the above range, it is favorable for the carbon material to have a high specific volume and/or a high compaction density, is also favorable to have a suitable total pore volume for the carbon material.

The method for preparing the carbon material of the present application is simple and safe, does not require preset pressure or vacuum treatment, and can be used without an additional depolymerization process in the heat treatment process. The carbon material prepared in the present application has small volume expansion, high structural stability and low surface activity, which can be further have high capacity per gram, high initial coulombic efficiency and small volume change, and can also make the secondary battery have high initial coulombic efficiency, high energy density and also have good cycling performance and storage performance.

The preparation method of the present application has low cost, high practicality, and is suitable for large to scale production.

### Secondary Battery

In the third aspect, the present embodiment provides a secondary battery.

There are no specific restrictions on the types of secondary batteries in the present application, for example, the secondary battery may be a lithium-ion batteries. Normally, the secondary battery comprises a positive electrode plate, a negative electrode plate, and electrolytes. During the charging and discharging process of the secondary battery, active ions repeatedly intercalate into and deintercalate back and forth between the positive electrode plate and the negative electrode plate, and the electrolyte plays the role of conducting active ions between the positive electrode plate and the negative electrode plate. The present application has no particular limitation on the type of the electrolyte, which may be selected according to actual needs. For example, the electrolyte may be selected from at least one of a solid electrolyte and a liquid electrolyte (i.e., an electrolytic solution). In the secondary battery employing an electrolytic solution, and in some secondary batteries employing a solid electrolyte, a separator may be included, which is provided between the positive electrode plate and the negative electrode plate to serve as an isolation.

### [Negative electrode plate]

In some embodiments, the negative electrode plate includes a negative electrode current collector and a negative film layer arranged on at least one surface of the negative electrode current collector. For example, the negative electrode current collector has two surfaces opposite in the thickness direction thereof, and the negative electrode film layer is arranged on either or both of the two opposite surfaces of the negative electrode current collector.

In some embodiments, the negative electrode film layer comprises the carbon material according to the first aspect of the embodiment of the present application or the carbon material prepared by the method according to the second aspect of the embodiment of the present application. Accordingly, the secondary battery can have high initial columbic efficiency, high energy density and also have good cycling and storage performances.

In some embodiments, the negative electrode film layer may further include other negative electrode active materials in addition to the aforementioned carbon materials. In some embodiments, the other negative electrode active materials include but are not limited to one or more of conventional natural graphite, artificial graphite, soft carbon, hard carbon, silicon-based materials, tin-based materials, and lithium titanate. The silicon-based material may include one or more of elemental silicon, a silicon oxide, a silicon carbon composite, a silicon nitrogen composite, and a silicon alloy material. The tin-based material may include one or more of elemental tin, a tin oxide, and a tin alloy material.

In some embodiments, the negative electrode film layer may optionally include a negative electrode conductive agent. In the present application, the types of negative electrode conductive agents are not specially limited. For example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer may optionally include a negative electrode binder. In the present application, the type of negative electrode binders is not specially limited. For example, the negative electrode binder may include one or more of styrene butadiene rubber (SBR), water-soluble unsaturated resin SR-1B, water-based acrylic resin (such as polyacrylic acid PAA, polymethyl acrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the negative electrode film layer may optionally include other additives. For example, other additives may include a thickener, such as sodium carboxymethyl cellulose (CMC), and a PTC thermistor material.

In some embodiments, the negative electrode current collector may be a metal foil or composite current collector. As an example of the metal foil, a copper foil may be used. The composite current collector may include a polymeric material base layer and a metal material layer formed on at least one surface of the polymeric material base layer. As an example, the metal material may comprise one or more of copper, copper alloy, nickel, nickel alloy, titanium, titanium alloy, silver, and silver alloy, and the polymeric material base layer may include one or more of polypropylene (PP), polyethylene terephthalate (PET), polybutylene terephthalate (PBT), polystyrene (PS), and polyethylene (PE).

The negative electrode film layer is usually formed by applying the negative electrode slurry on the negative electrode current collector, drying, and cold pressing. The negative electrode slurry is usually formed by dispersing the negative electrode active material, optional conductive agent, optional binder, and other optional additives in a solvent and stirring homogeneously. The solvent may be N-methylpyrrolidone (NMP) or deionized water, but is not limited thereto.

The negative electrode plate does not exclude other additional functional layers other than the negative electrode film layer. For example, in some embodiments, the negative electrode plate described in the present application further includes a conductive primer layer sandwiched between the negative electrode current collector and the negative electrode film layer, arranged on the surface of the negative electrode current collector (for example, composed of a conductive agent and a binder). In some embodiments, the negative electrode plate described in the present application also includes a protective layer covering on the surface of the negative electrode film layer.

### [Positive electrode plate]

In some embodiments, the positive electrode plate includes a positive electrode current collector and a positive electrode film layer arranged on at least one surface of the positive electrode current collector. For example, the positive electrode current collector has two surfaces opposite in the thickness direction thereof, and the positive electrode film layer is arranged on either or both of the two opposite surfaces of the positive electrode current collector.

The positive electrode current collector may be a metal foil or composite current collector. For example, the metal foil may be an aluminum foil. The composite current collector may include a polymeric material base layer and a metal material layer formed on at least one surface of the polymeric material base layer. For example, the metal material may include one or more of aluminum, aluminum alloys, nickel, nickel alloys, titanium, titanium alloys, silver, and silver alloys. For example, the polymeric material base layer may include one or more of polypropylene (PP), polyethylene terephthalate (PET), polybutylene terephthalate (PBT), polystyrene (PS), and polyethylene (PE).

The positive electrode film layer typically includes a positive electrode active material, optional binder, and optional conductive agent. The positive electrode film layer is usually formed by applying the positive electrode slurry on the positive electrode current collector, drying, and cold pressing. The positive electrode slurry is usually formed by dispersing the positive electrode active material, optional conductive agent, optional binder, and any other components in a solvent and stirring homogeneously. The solvent may be N-methylpyrrolidone (NMP), but is not limited thereto. As an example, the positive electrode binder may include one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. As an example, the positive electrode conductive agent may include one or more selected from superconducting carbon, conductive graphite, acetylene black, carbon black, Ketjen black, carbon dots, carbon nanotubes, graphene, and carbon nanofibers.

The positive electrode active material may be a positive electrode active material commonly known in the art for secondary batteries.

When the secondary battery of the present application is a lithium-ion battery, the positive electrode active material may include at least one of lithium transition metal oxide, lithium-containing phosphate, or their respective modified compounds. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt aluminium oxide, or modified compounds thereof. Examples of the lithium-containing phosphate may include, but are not limited to, at least one of lithium iron phosphate, a composite of lithium iron phosphate and carbon, lithium manganese phosphate, a composite of lithium manganese phosphate and carbon, lithium ferromanganese phosphate, a composite of lithium ferromanganese phosphate and carbon, or their respective modified compounds.

In some embodiments, in order to further increase the energy density of the secondary battery, the positive electrode active material for the lithium-ion battery may include one or more of the lithium transition metal oxides with the formula LiₐNi_{b}Co_{c}M_{d}OₑA_{f} and modified compounds thereof, in which 0.8 ≤ a ≤ 1.2, 0.5 ≤ b < 1, 0 < c < 1, 0 < d < 1, 1 ≤ e ≤ 2, 0 ≤ f ≤ 1, M is selected from one or more of Mn, Al, Zr, Zn, Cu, Cr, Mg, Fe, V, Ti, and B, and A is selected from one or more of N, F, S, and Cl.

In some embodiments, as an example, the positive electrode active material for a lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ and LiMnPO₄.

In the present application, the modified compounds of the foregoing positive electrode active materials may undergo doping modification and/or surface cladding modification of the positive electrode active materials.

### [Electrolyte]

In some embodiments, the electrolyte is an electrolytic solution comprising an electrolyte salt and an organic solvent.

The type of the electrolyte salt is not specifically limited and may be selected according to actual needs.

When the secondary battery of the present application is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate (LiPO₂F₂), lithium difluorobisoxalate phosphate (LiDFOP), and lithium tetrafluorooxalate phosphate (LiTFOP).

The type of the solvent is not specifically limited and may be selected according to actual needs. As an example, the organic solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), fluoroethylene carbonate (FEC),methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and ethyl sulfonyl ethane (ESE).

In some embodiments, the electrolytic solution may further optionally include additives. For example, the additives may include a negative electrode film-forming additive, a positive electrode film-forming additive, as well as additives that can improve certain performance of secondary batteries, such as an additive that improves overcharge performance of batteries, an additive that improves high-temperature performance of batteries, and an additive that improves low-temperature power performance of batteries.

### [Separator]

There is no particular limitation on the type of the separator in the present application. The separator may be any known porous separator with good chemical and mechanical stability.

In some embodiments, the material of the separator may include one or more of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different.

In some embodiments, the positive electrode plate, the negative electrode plate, and the separator may be manufactured into an electrode assembly through a winding process or a stacking process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. A material of the soft bag can be plastic, such as one or more of polypropylene (PP), polybutylene terephthalate (PBT), and polybutylene succinate (PBS).

The shape of the secondary battery is not particularly limited in the present application, and it may be cylindrical, square, rectangular or any other shape. FIG. 2 is a schematic diagram of a secondary battery 5 of a rectangular structure as an example.

In some embodiments, as shown in FIG. 3, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

The method for preparing the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary batteries according to the present application can be assembled into a battery module, and the number of secondary batteries contained in the battery module can be more than one, and the specific number can be adjusted according to application and capacity of the battery module.

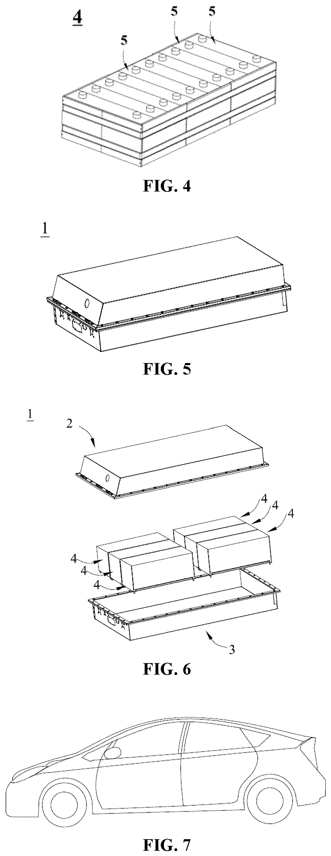

FIG. 4 is a schematic diagram of the battery module 4 as an example. As shown in FIG. 4, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

FIGS. 5 and 6 are schematic diagrams of the battery pack 1 as an example. As shown in FIGS. 5 and 6, the battery pack 1 may include a battery case and a plurality of battery modules 4 provided in the battery case. The battery case includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical Device

The present application further provides an electrical device comprising at least one of the secondary battery, battery module, or battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select to use a secondary battery, a battery module or a battery pack according to its usage requirements.

FIG. 7 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electrical device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### (1) Preparation of Carbon Material

Step 1: 100 mesh flake graphite was mechanical crushed, graded, spheroidized, and purified, to obtain natural spherical graphite having a volume distribution particle size Dv50 of 17 µm, a total pore volume of 54×10⁻³ cm³/g, and a graphitization degree of 96.7%.

Step 2: The obtained natural spherical graphite and petroleum asphalt (having a softening point of 116°C, a volume distribution particle size Dv50 of 3.7 µm, and a coking value of 32%) were mixed at a mass ratio of 100:15 in a VC mixer for 30 minutes, and then the mixed materials were placed in a drum furnace, where the temperature was raised at a rate of 5°C/min to 220°C and was kept for 1.5 hours (the first heating process), and then the temperature was raised at a rate of 5°C/min to 1100°C and was kept for 2 hours (the second heating process). Then, the temperature was cooled to room temperature to obtain the intermediate.

Step 3: The obtained intermediate was placed in the Acheson graphitization furnace, and the temperature was raised to 2345°C and kept for 2 hours. After demagnetizing and screening, the carbon material was obtained.

### (2) Preparation of Button Battery (Half-Cell)

The above prepared carbon material was mixed with the styrene butadiene rubber (SBR) as a binder, sodium carboxymethyl cellulose (CMC) as a thickener, and carbon black as a conductive agent in an appropriate amount of solvent deionized water in a mass ratio of 96.2:1.8:1.2:0.8, to form a uniform negative electrode slurry; the negative electrode slurry was applied homogeneously on the surface of the negative electrode current collector copper foil, and dried in an oven for later use. Ethylene carbonate (EC), methyl ethyl carbonate (EMC), and diethyl carbonate (DEC) were mixed in a volume ratio of 1:1:1 to obtain an organic solvent. Then, LiPF₆ was dissolved in the aforementioned organic solvent to prepare an electrolytic solution with a concentration of 1 mol/L. Afterwards, a CR2430 button battery was assembled in an argon protected glove box by using a metal lithium sheet as the counter electrode and polyethylene (PE) film as the separator.

### (3) Preparation of Secondary Battery (Full-Cell)

The above prepared carbon material, carbon black (Super P) as a conductive agent, styrene butadiene rubber as a binder, and sodium carboxymethyl cellulose as a thickener were mixed in an appropriate amount of solvent deionized water in a weight ratio of 96:1:1:2 to form a negative electrode slurry. The negative electrode slurry was applied onto the two surfaces of the negative electrode current collector copper foil, and after drying and cold pressing, the negative electrode plate was obtained.

LiFePO₄, conductive carbon black and polyvinylidene fluoride were mixed in a weight ratio of 96:2.5:1.5, then an appropriate amount of solvent NMP was added under homogeneous stirring, to obtain the positive electrode slurry. The positive electrode slurry was applied onto the two surfaces of the positive electrode current collector aluminum foil, and after drying and cold pressing, the positive electrode plate was obtained.

The polypropylene film having a thickness of 12 µm was used as a separator, and was placed with the positive and negative electrode plates prepared above in sequence, so that the separator was between the positive and negative electrode plates to play a role of isolation; then they were wound to obtain the electrode assembly; the electrode assembly was placed in the outer packaging and dried, after which the electrolyte solution identical to that for the preparation of the button battery was injected. After vacuum encapsulation, standing, chemical formation, shaping, and other processes, the secondary battery was obtained.

### Comparative Example 1

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 17 µm, a total pore volume of 54×10⁻³ cm³/g, and a graphitization degree of 96.7%. Then the obtained natural spherical graphite was used as a carbon material to prepare half-cells and full-cells.

### Comparative Example 2

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 17 µm, a total pore volume of 54×10⁻³ cm³/g, and a graphitization degree of 96.7%.

The obtained natural spherical graphite and petroleum asphalt (having a softening point of 116°C, a volume distribution particle size Dv50 of 3.7 µm, and a coking value of 32%) were mixed at a mass ratio of 100:15 in a VC mixer for 30 minutes, and then the mixed materials were graphitized at 3200°C for 10 hours. After cooled to room temperature, the carbon material was obtained.

### Comparative Example 3

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 17 µm, a total pore volume of 54×10⁻³ cm³/g, and a graphitization degree of 96.7%.

The obtained natural spherical graphite and petroleum asphalt (having a softening point of 116°C, a volume distribution particle size Dv50 of 3.7 µm, and a coking value of 32%) were mixed at a mass ratio of 100:15 in a VC mixer for 30 minutes, and then the mixed materials were graphitized at 1300°C for 2 hours. After cooled to room temperature, the carbon material was obtained.

### Comparative Example 4

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 17 µm, a total pore volume of 54×10⁻³ cm³/g, and a graphitization degree of 96.7%.

The asphalt was added to the washing oil, and fully dissolved by high-speed stirring to obtain the asphalt solution. 100g of natural spherical graphite was placed into the reaction kettle, vacuum for 60min. When the vacuum degree of the reaction kettle reached 0.07MPa, the suction valve of the asphalt solution was switched on until all the asphalt solution was sucked into the reaction kettle, after that the suction valve was closed, and the vacuum was stop, and at the same time, the mixture was stirred at a high speed for 40min, after the impregnation was finished by boosting pressure (12MPa), the pressure was induced to make the pressure inside and outside of the reaction kettle the same, and then the temperature was heated to 230°C with nitrogen to remove the washing oil. When all the washing oil in the reaction kettle was discharged, the reaction kettle was heated to 410°C at a heating rate of 5°C/min for thermal polymerization reaction for 10h under the condition of pressure of 1.5MPa, and then cooled down to room temperature and the material was discharged. The obtained material was held under isostatic pressure (10MPa) for 30min, then treated with graphitization at high temperature (2800°C) for 4h, cooled to room temperature, and then crushed. The crushed material was mixed with asphalt in a ratio of 100:5 homogeneously, and then carbonized under nitrogen protection at 1000°C for 5h, cooled to room temperature to obtain carbon the material without internal pores.

### Examples 2 to 23

The half-cells and full-cells were prepared according to the methods similar to those of Example 1, except that the preparation process parameters of the carbon material were adjusted, as detailed in Table 1.

**Table 1**

| No. | Filling material | | | Mass ratio of natural | Step 2 | | | | Step 3 | | | |
|---|---|---|---|---|---|---|---|---|---|---|---|---|
| | | | | | First heating process | Second heating process | | | | | | |
| | Softening point (°C) | Dv50 (µm) | Coking value | spherical graphite to petroleum asphalt | Heating rate (°C/min) | Holding temperature (°C) | Holding time (h) | Heating rate (°C/min) | Holding temperature (°C) | Holding time (h) | Heating temperature (°C) | Holding time (h) |
| Example 1 | 116 | 3.7 | 32% | 100:15 | 5 | 220 | 1.5 | 5 | 1100 | 2 | 2345 | 2 |
| Example 2 | 116 | 3.7 | 32% | 100:13 | 5 | 220 | 1.5 | 5 | 1100 | 2 | 2345 | 2 |
| Example 3 | 116 | 3.7 | 32% | 100:11 | 5 | 220 | 1.5 | 5 | 1100 | 2 | 2345 | 2 |
| Example 4 | 116 | 3.7 | 32% | 100:11 | 5 | 210 | 1.5 | 5 | 1100 | 2 | 2200 | 2 |
| Example 5 | 116 | 3.7 | 32% | 100:11 | 5 | 200 | 1.5 | 5 | 1100 | 2 | 2100 | 2 |
| Example 6 | 116 | 3.7 | 32% | 100:18 | 5 | 220 | 1.5 | 5 | 1100 | 2 | 2500 | 2 |
| Example 7 | 116 | 3.7 | 32% | 100:15 | 5 | 200 | 1 | 5 | 1100 | 2 | 1950 | 2 |
| Example 8 | 116 | 3.7 | 32% | 100:20 | 5 | 220 | 1.5 | 5 | 1100 | 5 | 2500 | 6 |
| Example 9 | 80 | 3.7 | 22% | 100:15 | 5 | 220 | 1.5 | 5 | 1100 | 2 | 2345 | 2 |
| Example 10 | 95 | 3.7 | 25% | 100:15 | 5 | 220 | 1.5 | 5 | 1100 | 2 | 2345 | 2 |
| Example 11 | 108 | 3.7 | 30% | 100:15 | 5 | 220 | 1.5 | 5 | 1100 | 2 | 2345 | 2 |
| Example 12 | 132 | 3.7 | 36% | 100:15 | 5 | 220 | 1.5 | 5 | 1100 | 2 | 2345 | 2 |
| Example 13 | 152 | 3.7 | 42% | 100:15 | 5 | 220 | 1.5 | 5 | 1100 | 2 | 2345 | 2 |
| Example 14 | 200 | 3.7 | 50% | 100:15 | 5 | 250 | 1.5 | 5 | 1100 | 2 | 2345 | 2 |
| Example 15 | 116 | 3.7 | 32% | 100:15 | 1 | 220 | 1.5 | 5 | 1100 | 2 | 2345 | 2 |
| Example 16 | 116 | 3.7 | 32% | 100:15 | 3 | 220 | 1.5 | 5 | 1100 | 2 | 2345 | 2 |
| Example 17 | 116 | 3.7 | 32% | 100:15 | 8 | 220 | 1.5 | 5 | 1100 | 2 | 2345 | 2 |
| Example 18 | 116 | 3.7 | 32% | 100:15 | 10 | 220 | 1.5 | 5 | 1100 | 2 | 2345 | 2 |
| Example 19 | 116 | 3.7 | 32% | 100:15 | 5 | 220 | 1.5 | 5 | 600 | 2 | 2345 | 2 |
| Example 20 | 116 | 3.7 | 32% | 100:15 | 5 | 220 | 1.5 | 5 | 700 | 2 | 2345 | 2 |
| Example 21 | 116 | 3.7 | 32% | 100:15 | 5 | 220 | 1.5 | 5 | 850 | 2 | 2345 | 2 |
| Example 22 | 116 | 3.7 | 32% | 100:15 | 5 | 220 | 1.5 | 5 | 950 | 2 | 2345 | 2 |
| Example 23 | 116 | 3.7 | 32% | 100:15 | 5 | 220 | 1.5 | 5 | 1200 | 2 | 2345 | 2 |

### Performance Tests

### (1) Test of total pore volume test of carbon materials

A sample of a certain mass of carbon material (e.g., 1.5 g to 3.5 g) is loaded into a sample tube, dried and processed, degassed at 200°a for 2 h, and then placed into a Tristar II 3020 instrumental analytical station for testing to obtain the total pore volume V of the carbon material. The adsorption gas for the test can be nitrogen and the adsorption temperature can be 77 K (K denotes Kelvin temperature).

### (2) Test of powder compaction density of carbon materials

According to GB/T 24533-2009, 1 g of carbon material powder is weighted and added into a mold with a bottom area of 1.327 cm², pressurized to 5000 kg (equivalent to 50000 N), held the pressure for 30 s, and then unpressurized and held for 10 s, and then recorded and calculated to obtain the powder compaction density under a pressure of 50,000 N of the carbon material. UTM7305 electronic pressure testing machine can be used as the test instrument.

### (3) Test of the total pore area in the external region and internal region of carbon materials

The binder for making sample was homogeneously mixed with carbon material powder and then the mixture was applied on the copper foil, drying at 60°C for 30 minutes; the samples were cut into pieces of 6mm × 6mm and then were pasted on the sample stage of CP-type Argon Ion Cross-Section Polisher; the samples were cut using a plasma beam to obtain the cross-section of the carbon material, the cross-section of the carbon material particles passed through the center of the carbon material particles. The test instrument may be IB- 09010 CP Argon Ion Cross-Section Polisher from JEOL, Japan. The cross-section of the carbon materials were scanned using a scanning electron microscope. The test may be conducted according to JY/T010-1996. The test instrument may be Sigma 300 Scanning Electron Microscope from ZEISS, Germany. The region comprising a distance of 0.25 L extending from the surface of the particles of the carbon material to the inside of the particles was noted as the external region, the region inside the external region was noted as the internal region, and L denoted the short-axis length of the particles of the carbon material. A total pore area S₁ of the external region of the carbon material and a total pore area S₂ of the internal region of the carbon material were calculated using an image processing software. The image processing software may be AVIZO.

### (4) Test of the initial columbic efficiency of carbon materials

The button battery as prepared above was firstly discharged to current of 0.005V at a constant current of 0.15mA at 25°C, standing for 5 minutes, and then was discharged to 0.005V at a constant current of 10 µA, the discharging capacity of the button battery at the 1^{st} cycle was recorded; afterwards, it was charged to 2.0V at a constant current of 0.3mA and the charging capacity of the button battery at the 1^{st} cycle was recorded. The initial columbic efficiency of carbon materials (%) = charging capacity of button battery at the 1^{st} cycle/discharging capacity of button battery at the 1^{st} cycle× 100%.

### (5) Test of cycling performance of secondary batteries

At 25°C, the secondary battery as prepared above was charged at a constant current of 1C to the upper limit cutoff voltage (corresponding to 100% SOC), then charged at the constant voltage to a current of 0.05C, standing for 5 minutes, and was discharged at a constant current of 1C to the lower limit cutoff voltage (corresponding to 0% SOC). The discharging capacity at this time was recorded as the discharging capacity of the 1^{st} cycle. The secondary battery was charged and discharged for cycles according to the above method, and the discharging capacity for each cycle was recorded. Capacity retention rate (%) of secondary battery after 2000 cycles at 25°C = discharging capacity at the 2000^{th} cycle/ discharging capacity at the 1^{st} cycle × 100%.

### (6) Test of storage performance of secondary batteries

At 25°C, the secondary battery as prepared above was charged at a constant current of 1C to the upper limit cutoff voltage (corresponding to 100% SOC), then charged at the constant voltage to a current of 0.05C, standing for 5 minutes, and was discharged at a constant current of 1C to the lower limit cutoff voltage (corresponding to 0% SOC). The discharging capacity at this time was recorded as the discharging capacity discharge capacity before storage.

At 25°C, the secondary battery as prepared above was charged at a constant current of 1C to the upper limit cutoff voltage (corresponding to 100% SOC), then charged at the constant voltage to a current of 0.05C. Then, the secondary battery was stored in a thermostat at 60°C until the discharging capacity of the secondary battery after storage was attenuated to 90% of the discharging capacity before storage. The test was stopped and the storage days of the secondary battery were recorded.

**Table 2**

| No. | Carbon material | | | | | | Performance of battery | | |
|---|---|---|---|---|---|---|---|---|---|
| | V×P | V (10⁻³ cm³/g) | P (g/cm³) | S₁ (µm₂) | S₂ (µm₂) | S₂/S₁ | Initial columbic efficiency | Capacity retention rate after 2000 cycles | Storage days |
| Comparative Example 1 | 72.4×10⁻³ | 54.00 | 1.34 | 18.8 | 16.0 | 0.85 | 87.5% | Less than 2000 cycles | 104 |
| Comparative Example 2 | 13.3×10⁻³ | 6.86 | 1.94 | 16.6 | 15.8 | 0.95 | 91.0% | 88.0% | 130 |
| Comparative Example 3 | 15.4×10⁻³ | 9.32 | 1.65 | 16.2 | 15.9 | 0.98 | 89.4% | 83.4% | 114 |
| Comparative Example 4 | 3.0×10⁻³ | 1.45 | 2.05 | 1.6 | 1.4 | 0.88 | 91.5% | 89.2% | 132 |
| Example 1 | 4.5×10⁻³ | 2.43 | 1.85 | 2.8 | 10.6 | 3.79 | 95.0% | 92.0% | 210 |
| Example 2 | 6.0×10⁻³ | 3.24 | 1.85 | 3.4 | 10.8 | 3.18 | 94.7% | 91.5% | 200 |
| Example 3 | 8.0×10⁻³ | 4.32 | 1.85 | 3.9 | 11.9 | 3.05 | 94.4% | 91.2% | 192 |
| Example 4 | 10.0×10⁻³ | 5.41 | 1.85 | 5.8 | 11.9 | 2.05 | 93.2% | 91.0% | 187 |
| Example 5 | 12.0×10⁻³ | 6.49 | 1.85 | 7.2 | 11.6 | 1.61 | 91.9% | 90.7% | 184 |
| Example 6 | 4.5×10⁻³ | 2.25 | 2.00 | 2.3 | 10.3 | 4.48 | 95.2% | 90.0% | 208 |
| Example 7 | 6.0×10⁻³ | 3.53 | 1.70 | 9.9 | 11.8 | 1.19 | 94.6% | 89.9% | 179 |
| Example 8 | 4.1×10⁻³ | 2.00 | 2.07 | 2.0 | 6.6 | 3.30 | 95.6% | 89.5% | 210 |
| Example 9 | 11.8×10⁻³ | 6.40 | 1.85 | 6.4 | 12.5 | 1.95 | 92.8% | 90.0% | 186 |
| Example 10 | 9.6×10⁻³ | 5.18 | 1.85 | 5.0 | 12.5 | 2.50 | 94.4% | 92.0% | 198 |
| Example 11 | 6.0×10⁻³ | 3.23 | 1.85 | 3.9 | 11.9 | 3.05 | 95.2% | 92.0% | 210 |
| Example 12 | 6.7×10⁻³ | 3.60 | 1.85 | 6.7 | 11.3 | 1.69 | 94.7% | 92.0% | 205 |
| Example 13 | 11.5×10⁻³ | 6.20 | 1.85 | 7.8 | 11.9 | 1.53 | 93.3% | 91.0% | 188 |
| Example 14 | 12.0×10⁻³ | 6.50 | 1.85 | 11.1 | 12.1 | 1.09 | 92.9% | 90.0% | 182 |
| Example 15 | 4.3×10⁻³ | 2.30 | 1.88 | 3.0 | 6.6 | 2.20 | 95.5% | 90.0% | 211 |
| Example 16 | 4.4×10⁻³ | 2.39 | 1.85 | 3.3 | 8.9 | 2.70 | 95.3% | 91.0% | 210 |
| Example 17 | 7.9×10⁻³ | 4.36 | 1.82 | 6.1 | 11.9 | 1.95 | 94.5% | 91.6% | 204 |
| Example 18 | 11.7×10⁻³ | 6.48 | 1.80 | 7.2 | 11.9 | 1.65 | 93.9% | 90.7% | 194 |
| Example 19 | 11.7×10⁻³ | 6.31 | 1.85 | 5.3 | 13.7 | 2.58 | 93.4% | 90.1% | 192 |
| Example 20 | 7.9×10⁻³ | 4.24 | 1.86 | 5.1 | 13.5 | 2.65 | 94.6% | 92.0% | 203 |
| Example 21 | 6.4×10⁻³ | 3.51 | 1.83 | 4.7 | 13.1 | 2.79 | 94.6% | 92.0% | 208 |
| Example 22 | 5.6×10⁻³ | 2.99 | 1.88 | 3.5 | 12.7 | 3.63 | 95.0% | 92.0% | 210 |
| Example 23 | 4.4×10⁻³ | 2.42 | 1.83 | 2.7 | 10.7 | 3.96 | 95.3% | 92.0% | 212 |

Parameters such as specific surface area, volume distribution particle size, tap density, graphitization degree, etc. of the carbon materials prepared in Examples 1-23 are within the ranges described in the specification of the present application.

As can be seen from the test results in Table 2, when the carbon material satisfies 4.1×10⁻³ ≤ V×P ≤ 12.0×10⁻³, it can make the battery have a high initial columbic efficiency, a high energy density, and also have good cycling performance and storage performance. In addition, when the carbon material further satisfies 4.3×10⁻³ ≤ V×P ≤ 10.0×10⁻³, and optionally 4.4×10⁻³ ≤ V×P ≤ 8.0× 10⁻³, the overall performance of the batteries is further improved.

None of the carbon materials prepared in Comparative Examples 1-4 satisfy 4.1×10⁻³ ≤ V×P ≤ 12.0×10⁻³, and none of them can make the battery have a high initial columbic efficiency, a high energy density, and also have good cycling performance and storage performance.

Comparative Example 1 uses untreated natural spherical graphite as a carbon material, which has more internal pores and larger total pore volume. Combining with the test results in Table 2, it can be seen that the capacity per gram, initial columbic efficiency, cycling performance, and storage performance of the batteries prepared therefrom are poor, and the discharging capacity of the batteries has decayed to 80% of the discharging capacity of the first cycle before the number of cycles reaches 2000 cycles.

The carbon materials prepared in Comparative Examples 2-3 formed a carbon layer cladding layer on the surface of the natural spherical graphite, but the carbon layer only exists on the surface of the natural spherical graphite, which fails to realize the effective filling effect, at this time, the carbon material particles have larger total pore volume and/or higher compaction density, and the carbon layer cannot effectively prevent the electrolytic solution from penetrating into the pore structure inside the particles, which leads to the limited improvement in the initial coulombic efficiency, the cycling performance and storage performance of the batteries.

In the preparation of the carbon material in Comparative Example 4, the filling material is filled into all the pore structures of the natural spherical graphite particles by isostatic pressure, at this time, the total pore volume of the carbon material is too small, which causes the volume of carbon material particles to change greatly during the intercalation and deintercalation of active ions, and renders the particles more prone to fragmentation, thereby leading to the limited improvement of the cycling performance and storage performance of the batteries. In addition, the existence of a large amount of soft carbon inside and/or on the surface of the carbon material particles increases the surface side reaction of the particles, which also affects the cycling performance and storage performance of the batteries. Meanwhile, the preparation process is complicated and not suitable for large-scale production.

As can be seen from the test results in Table 2, when the total pore volume V of the carbon material is 2.3×10⁻³ cm³/g-7.5×10⁻³ cm³/g, and optionally 2.4×10⁻³ cm³/g-6.0×10⁻³ cm³/g, the overall performance of the batteries is further improved.

As can be seen from the test results in Table 2, when the powder compaction density P of under a pressure of 50,000 N of the carbon material is 1.80 g/cm³-2.10 g/cm³, optionally 1.82 g/cm³-2.06 g/cm³, the overall performance of the cells is further improved.

As can be seen from the test results in Table 2, when the carbon material particles further satisfy S₂ > S₁, optionally 1.5 ≤ S₂/S₁ ≤ 460, and more optionally 1.7 ≤ S₂/S₁ ≤ 380, the overall performance of the batteries is further improved. In this case, the carbon material particles may have the following features: a high number of pores and/or a large pore size in the internal region and a low number of pores and/or a small pore size in the external region. The pore structure of the internal region of the carbon material particles can reserve the required expansion space for the volume change of the carbon material particles, thereby reducing the risk of fragmentation of the carbon material particles to generate new interfaces, thereby reducing the side reactions, and reducing the irreversible capacity loss of the secondary battery; the number of pores in the external region of the carbon material particles is lower and/or the size of the pores is smaller, whereby the carbon material particles can be made to have a more stable structure, avoiding the electrolytic solution to penetrate into the internal pore structure of the carbon material particles as much as possible, thereby being able to reduce the side reactions, reduce the consumption of active ions for the formation of the SEI film inside the particles. As a result, the carbon material that further satisfies the above structural features can further improve the overall performance of the batteries.

It should be noted that the present application is not limited to the above implementations. The above implementations are only examples, and all implementations having compositions and effects substantially identical to the technical concept of the present application are included in the scope of the present application. In addition, without deviating from the gist of the present application, various variations applied to the implementations that could be conceived by those skilled in the art and other modes constructed by combining some elements of the implementations are also included in the scope of the present application.

## Claims

1. A carbon material comprising a pore structure, wherein the carbon material has a total pore volume denoted as V and a powder compaction density under a pressure of 50,000 N denoted as P, and the carbon material satisfies: 4.1 × 10⁻³ ≤ V × P ≤ 12.0 × 10⁻³, in which the total pore volume V of the carbon material has an unit of cm³/g and the powder compaction density P under a pressure of 50,000 N has an unit of g/cm³.

2. The carbon material according to claim 1, wherein,
4.3 × 10⁻³ ≤ V × P ≤ 10.0 × 10⁻³, optionally, 4.4 × 10⁻³ ≤ V× P ≤ 8.0 × 10⁻³; and/or.
the carbon material has a total pore volume V of 2.3 × 10⁻³ cm³/g - 7.5 × 10⁻³ cm³/g, optionally 2.4 × 10⁻³ cm³/g - 6.0 × 10⁻³ cm³/g; and/or.
the carbon material has a powder compaction density P under a pressure of 50,000 N of 1.80 g/cm³ - 2.10 g/cm³, optionally 1.82 g/cm³ - 2.06 g/cm³.

3. The carbon material according to claim 1 or 2, wherein the carbon material comprises more than one pore structure with a pore area greater than or equal to 0.1 µm², optionally comprising more than one pore structure with a pore area of 0.12 µm²-1.5 µm².

4. The carbon material according to any one of claims 1 to 3, wherein the carbon material comprises an external region and an internal region disposed on the inside of the external region, the external region being a region comprising a distance of 0.25 L extending from the surface of the particles of the carbon material towards the interior of the particles, L being a short-axis length of the particles of the carbon material; total pore area of the external region being denoted as S₁ and total pore area of the internal region being denoted as S₂, and S₂ > S₁.

5. The carbon material according to claim 4, wherein 1.5 ≤ S₂/S₁ ≤ 460, optionally 1.7 ≤ S₂/S₁ ≤ 380.

6. The carbon material according to claim 4 or 5, wherein
0.01 µm² ≤ S₁ ≤ 15.0 µm², optionally 0.02 µm² ≤ S₁ ≤ 12.0 µm²; and/or
2.5 µm² ≤ S₂ ≤ 25.0 µm², optionally 3.0 µm² ≤ S₂ ≤ 22.5 µm²; and/or
L ≥ 4 µm, optionally 6 µm ≤ L ≤ 18 µm.

7. The carbon material according to any one of claims 4 to 6, wherein the pore structure in the external region of the carbon material has an area of less than or equal to 0.13 µm², optionally less than or equal to 0.1 µm²; and/or
the internal region of the carbon material comprises more than one pore structure with an area of greater than or equal to 0.1 µm², optionally more than one pore structure with an area of from 0.12 µm² to 2.0 µm².

8. The carbon material according to any one of claims 4 to 7, wherein the external region of the carbon material has an interlayer spacing denoted as d₁, the internal region of the carbon material has an interlayer spacing denoted as d₂, and the carbon material satisfies d₁ ≥ d₂, optionally d₁ > d₂.

9. The carbon material according to claim 8, wherein
d₁ is from 0.33565 nm to 0.33600 nm; and/or
d₂ is from 0.33553 nm to 0.33575 nm.

10. The carbon material according to any one of claims 1 to 9, wherein the carbon material satisfies at least one of the following conditions:
(1) the carbon material has a specific surface area of from 0.6 m²/g to 2.0 m²/g, optionally from 0.8 m²/g to 1.6 m²/g;
(2) the carbon material has a volume distribution particle size Dv50 of from 8.0 µm to 20.0 µm, optionally from 8.5 µm to 19.0 µm;
(3) the carbon material has a volume distribution particle size Dv10 of from 5.0 µm to 15.0 µm, optionally from 6.0 µm to 14.0 µm;
(4) the carbon material has a volume distribution particle size Dv90 of from 16.0 µm to 35.0 µm, optionally from 17.0 µm to 34.0 µm;
(5) the carbon material has (Dv90-Dv10)/Dv50 of from 0.5 to 1.5, optionally from 0.7 to 1.45;
(6) the carbon material has a morphology comprising one or more of blocky, spherical, and quasi-spherical shapes.

11. The carbon material according to any one of claims 1 to 10, wherein the carbon material satisfies at least one of the following conditions:
(1) the carbon material has a graphitization degree of from 94.0% to 98.5%, optionally from 94.5% to 98.0%;
(2) the carbon material has a tap density of from 0.8 g/cm³ to 1.30 g/cm³, optionally from 0.85 g/cm³ to 1.28 g/cm³;
(4) the carbon material has a capacity per gram of from 350 mAh/g to 371 mAh/g, optionally from 353 mAh/g to 370 mAh/g.

12. A method for preparing a carbon material, comprising the following steps:
Step 1, providing a raw material with multiple pore structures;
Step 2, mixing the raw material with a filling material in a predetermined ratio homogeneously, and then holding at a first temperature T₁ for a first time t₁ to obtain an intermediate;
Step 3, holding the obtained intermediate at a second temperature T₂ for a second time t₂ to obtain a carbon material,
wherein the carbon material comprises a pore structure, the carbon material has a total pore volume denoted as V and a powder compaction density under a pressure of 50,000 N denoted as P, and the carbon material satisfies: 4.1 × 10⁻³ ≤ V × P ≤ 12.0 × 10⁻³, in which the total pore volume V of the carbon material has an unit of cm³/g and the powder compaction density P under a pressure of 50,000 N has an unit of g/cm³.

13. The method according to claim 12, wherein the raw material satisfies at least one of the following conditions:
(1) the raw material comprises natural graphite, optionally the natural graphite comprises one or more of flake graphite, natural spherical graphite, and microcrystalline graphite;
(2) the raw material has a volume distribution particle size Dv50 of from 9.0 µm to 20.0 µm, optionally from 10.0 µm to 19.0 µm; or
(3) the raw material has a total pore volume of ≥10×10⁻³ mm³/g, optionally from 20×10⁻³ cm³/g to 60×10⁻³ cm³/g;
(4) the raw material has a graphitization degree of ≥ 94.0%.

14. The method according to claim 12 or 13, wherein the filling material satisfies at least one of the following conditions:
(1) the filling material has a softening point of from 95°C to 158°C, optionally from 100°C to 145°C;
(2) the filling material has a coking value of from 15% to 42%, optionally from 20% to 38%;
(3) the filling material has a volume distribution particle size Dv50 of less than or equal to 6 µm, optionally from 2 µm to 5 µm.

15. The method according to claim 14, wherein the filling material comprises one or more of coal asphalt and petroleum asphalt.

16. The method according to any one of claims 12 to 15, wherein a mass ratio of the filling material to the raw material is (10-30):100, optionally (11-20):100.

17. The method according to any one of claims 12-16, wherein after mixing the raw material and the filling material in a predetermined ratio homogeneously, they are heated to the first temperature T₁ by a staged heating process, optionally including a first heating process and a second heating process.

18. The method according to claim 17, wherein
the first heating process is heating to a temperature of from 200°C to 250°C and holding at this temperature for 1 to 3 hours; and/or
the second heating process is heating to the first temperature T₁ and holding at the first temperature T₁ for the first time t₁.

19. The method according to any one of claims 12 to 18, wherein it is heated to the first temperature T₁ at a rate of 1°C/min-10°C/min, optionally 2°C/min-8°C/min.

20. The method according to any one of claims 12 to 19, wherein
the first temperature T₁ is from 700°C to 1200°C, optionally from 800 to 1100°C; and/or
the first time t₁ is from 1 hour to 5 hours, and optionally from 2 hours to 4 hours.

21. The method according to any one of claims 12 to 20, wherein
the second temperature T₂ is from 1950°C to 2550°C, optionally from 2050°C to 2500°C; and/or
the second time t₂ is from 1.5h to 6h, and optionally from 2h to 5h.

22. A secondary battery, comprising a negative electrode plate comprising the carbon material according to any one of claims 1 to 11 or the carbon material prepared by the method according to any one of claims 12 to 21.

23. An electrical device, comprising the secondary battery according to claim 22.
